# EUROPÄISCHE PATENTSCHRIFT

(11) **EP 4 426 465 B1**
(45) Veröffentlichungstag und Bekanntmachung des Hinweises auf die Patenterteilung: **17.09.2025**
(21) Anmeldenummer: 22800629.2
(22) Anmeldetag: 05.10.2022
(51) Int. Cl.: B01D 46/00, B01D 46/10, B01D 46/52, F02M 35/024, F02M 35/14, B01D 46/42, F02M 35/02, F02M 35/12

(54) **FILTERSYSTEM MIT EINEM FILTERGEHÄUSE, EINEM AUSTAUSCHBAREN FILTERELEMENT UND EINER RESONATORSTRUKTUR**
FILTER SYSTEM COMPRISING A FILTER HOUSING, A REPLACEABLE FILTER ELEMENT AND A RESONATOR STRUCTURE
SYSTÈME DE FILTRATION COMPRENANT UN BOÎTIER DE FILTRE, UN ÉLÉMENT FILTRANT REMPLAÇABLE ET UNE STRUCTURE DE RÉSONATEUR

(30) Priorität: 04.11.2021 DE 102021128679
(43) Veröffentlichungstag der Anmeldung: 11.09.2024
(73) Patentinhaber: MANN+HUMMEL GmbH, 71636 Ludwigsburg (DE)
(72) Erfinder: SCHMID, Daniel, 74343 Sachsenheim (DE); KOHN, Kevin, 71723 Großbottwar (DE)
(74) Vertreter: Mann + Hummel Intellectual Property
(86) Internationale Anmeldenummer: PCT/EP2022/077651
(87) Internationale Veröffentlichungsnummer: WO 2023/078622

(56) Entgegenhaltungen:
- CN-U- 207 315 552
- DE-A1- 102018 003 414
- DE-A1- 3 429 633
- JP-A- 2007 077 963

## Beschreibung

### Technisches Gebiet

Die Erfindung betrifft ein Filtersystem mit einem Filtergehäuse, welches einen Innenraum umschließt, in welchem ein austauschbares Filterelement und eine Resonatorstruktur angeordnet sind, wobei die Resonatorstruktur ein mehrteiliges Resonator-Gehäuse umfasst. Ferner betrifft die Erfindung eine Verwendung eines Filterelements in einem solchen Filtersystem.

### Stand der Technik

Aus CN207315552U ist ein Luftfilter bekannt, welcher ein oberes Gehäuseteil, ein Filterelement, ein unteres Gehäuseteil und einen Schalldämpfer umfasst. Das obere Gehäuseteil umfasst eine obere Trennwand, das untere Gehäuseteil umfasst eine untere Trennwand. Die obere Trennwand liegt der unteren Trennwand gegenüber. Die obere Trennwand und die untere Trennwand sind aneinander angepasst. Der durch das obere Gehäuseteil und das untere Gehäuseteil gebildete Hohlraum ist in einen Schalldämpferhohlraum und einen Filterhohlraum unterteilt; das untere Gehäuseteil ist mit einem Lufteinlass versehen, der mit dem Schalldämpferhohlraum in Verbindung steht, und das obere Gehäuseteil ist mit einem Luftauslass versehen, der mit dem Filterhohlraum in Verbindung steht. Das Filterelement befindet sich zwischen dem oberen Gehäuseteil und dem unteren Gehäuseteil. Ein Durchgangsloch ist in der unteren Trennwand angeordnet. Der Schalldämpfer weist eine gekrümmte Oberflächenstruktur und eine Vielzahl von Schalldämpferlöchern auf. Das untere Gehäuseteil umfasst Rippen, welche mit dem Schalldämpfer zusammenwirken, um einen schallabsorbierenden inneren Hohlraum zu bilden, wobei der innere Hohlraum des Schalldämpfers mit dem Lufteinlass in Verbindung steht.

### Offenbarung der Erfindung

Eine Aufgabe der Erfindung ist es, ein Filtersystem mit einem Filtergehäuse, welches einen Innenraum umschließt, in welchem ein austauschbares Filterelement und eine Resonatorstruktur angeordnet sind, zu schaffen, welches kostengünstig zu fertigen ist.

Die vorgenannte Aufgabe wird nach einem Aspekt der Erfindung von einem Filtersystem gelöst, mit einem Filtergehäuse, welches einen Innenraum umschließt, in welchem ein austauschbares Filterelement und eine Resonatorstruktur angeordnet sind, wobei die Resonatorstruktur ein mehrteiliges Resonator-Gehäuse umfasst, welches im bestimmungsgemäßen Zustand einen Hohlraum umschließt, welcher durch eine Trennwand in zwei Kammern aufgeteilt ist. Die Trennwand umfasst wenigstens einen Durchbruch, über welchen die beiden Kammern akustisch gekoppelt sind. Zumindest ein Gehäuseteil des Filtergehäuses umfasst ein Resonator-Gehäuseelement und das Filterelement umfasst ein Resonator-Gehäuseelement, wobei die Resonator-Gehäuseelemente im bestimmungsgemäßen Zustand das geschlossene Resonator-Gehäuse ausbilden.

Unter dem bestimmungsgemäßen Zustand wird im Folgenden der Zustand verstanden, in welchem das Filterelement im Filtergehäuse angeordnet ist und das Filtergehäuse bis auf Einlässe und Auslässe geschlossen ist. Im bestimmungsgemäßen Zustand kann das Filtersystem in Betrieb genommen werden oder ist bereits im Betrieb.

In vorteilhafter Weise ist das mit dem Filterelement verbundene Resonator-Gehäuseelement mit dem Filterelement austauschbar. Durch das Einbauen oder Einsetzen des Filterelements in das Filtergehäuse kann das Resonator-Gehäuse aus den wenigstens zwei Resonator-Gehäuseelementen gebildet werden. Hierbei ist im bestimmungsgemäßen Zustand des Filterelements ein Filtern des Fluids und eine Geräuschdämpfung, beispielsweise eines Nebenanschlussauslasses, nur dann möglich, wenn das Filterelement und das Filtergehäuse sowie die Resonator-Gehäuseelemente des Gehäuseteils und des Filterelements aneinander angepasst sind. Dadurch kann sichergestellt werden, dass nur geeignete Filterelemente in das korrespondierende Filtergehäuse eingebaut werden können, wodurch die Funktionalität eines korrespondierenden Filtersystems verbessert und die Einhaltung eines Qualitätsstandards erleichtert werden können.

Gemäß einer günstigen Ausgestaltung des Filtersystems kann das mehrteilige Resonator-Gehäuse einen Resonatoreinlass und einen Resonatorauslass umfassen, welche mit einer ersten Kammer gekoppelt sind, wobei der Resonatoreinlass in einem Reinfluidbereich des Innenraums angeordnet ist und der Resonatorauslass mit einem Nebenanschlussauslass des Filtergehäuses gekoppelt ist. Dadurch kann gefiltertes Fluid über die erste Kammer zu einem Nebenverbraucher geleitet werden. Zudem können durch die akustische Kopplung durch den wenigstens einen Durchbruch in der Trennwand, Störgeräusche gedämpft oder reduziert werden. Zudem ist das mehrteilige Resonator-Gehäuse im bestimmungsgemäßen Zustand abgeschlossen, das Fluid kann lediglich durch den Resonatoreinlass in das Resonator-Gehäuse einströmen und durch den Resonatorauslass aus dem Resonator-Gehäuse ausströmen. Endbereiche der Trennwand liegen jeweils an wenigstens einer Wand des entsprechenden Resonator-Gehäuseelements an. Alternativ kann die Trennwand mit dem entsprechenden Resonator-Gehäuseelement fest verbunden sein. Dadurch kann das Fluid nur durch die Durchbrüche der Trennwand mit einer Fluidsäule in der zweiten Kammer wechselwirken. Zwischen den Endbereichen der Trennwand und der jeweiligen Wand kann zusätzlich ein Dichtungselement angeordnet sein.

Der Nebenanschlussauslass kann zum Beispiel für Nebenverbraucher wie Kompressoren genutzt werden. Dies kann beispielsweise in einem Bremssystem eines Lastkraftwagens Anwendung finden.

Gemäß einer günstigen Ausgestaltung des Filtersystems kann die Trennwand einteilig oder mehrteilig ausgeführt sein. Bei einer einteiligen Ausführung kann die Trennwand mit einem der Resonator-Gehäuseelement verbunden sein und kann in das wenigstens eine weitere Resonator-Gehäuseelement hineinragen. Bei einer mehrteiligen Ausführung können die Trennwandelemente jeweils mit einem Resonator-Gehäuseelement verbunden sein. Zudem kann eine Verbindungsanordnung zwei benachbarte Trennwandelemente miteinander verbinden. Sowohl bei einer einteiligen Ausführung als auch bei einer mehrteiligen Ausführung der Trennwand kann wenigstens ein Trennwandelement der Trennwand mit einem der Resonator-Gehäuseelemente verbunden sein und aus dem entsprechenden Resonator-Gehäuseelement herausragen und im bestimmungsgemäßen Zustand in wenigstens ein weiteres Resonator-Gehäuseelement hineinragen. Bei der mehrteiligen Ausführung wäre es auch vorstellbar, dass lediglich Verbindungselemente der Verbindungsanordnung aus dem jeweiligen Resonator-Gehäuseelement herausragen.

Gemäß einer günstigen Ausgestaltung des Filtersystems können wenigstens zwei Resonator-Gehäuseelemente jeweils mit einem Trennwandelement verbunden sein, welche im bestimmungsgemäßen Zustand die Trennwand ausbilden. Hierbei ist eine Feste oder lösbare Verbindung umsetzbar. Zudem kann ein Trennwandelement in das Resonator-Gehäuseelement eines anderen Trennwandelements hineinragen, wenn die Abmessungen der Trennwandelemente entsprechend angepasst sind.

Gemäß einer günstigen Ausgestaltung des Filtersystems können Resonator-Gehäuseelemente, in welche ein Trennwandelement hineinragt, eine Trennwandelementhaltung aufweisen. Dadurch kann eine Stabilität der gebildeten Trennwand verbessert werden, zudem kann eine Anbindung eines Trennwandelements an ein anderes Resonator-Gehäuseelement verbessert werden. Des Weiteren kann die Trennwandelementhaltung Führungselemente aufweisen. Durch die Führungselemente, welche beispielsweise als Nut ausgebildet sein können, kann das Einführen des Trennwandelements in das entsprechende Resonator-Gehäuseelement und/oder das Positionieren des Trennwandelements und/oder das Positionieren des entsprechenden Gehäuseteils und/oder das Positionieren des Filterelements in vorteilhafter Weise erleichtert werden. Dadurch kann das Bilden der Resonatorstruktur beim Einbau des Filterelements in das Filtergehäuse erleichtert werden.

Erfindungsgemäß weist ein Filterbalg des Filterelements eine Aussparung auf, welche eine filterelementseitige Resonator-Gehäuseaufnahme ausbildet, in welcher im bestimmungsgemäßen Zustand wenigstens ein Resonator-Gehäuseelement angeordnet ist. Die Aussparung durchbricht den Filterbalg des Filterelements. Hierbei kann das Resonator-Gehäuseelement, welches in die filterelementseitige Gehäuseaufnahme ragt, ein filterelementseitiges Resonator-Gehäuseelement und/oder ein filtergehäuseteilseitiges Resonator-Gehäuseelement sein. Dadurch kann das Fluid von einer Reinfluidseite in Richtung Rohfluidseite umgeleitet werden, ohne mit ungefilterten Fluid der Rohfluidseite in Kontakt zu kommen. Zudem kann eine platzsparende Anordnung des Resonator-Gehäuses umgesetzt werden. Des Weiteren kann das Resonator-Gehäuse flexibel im Filtergehäuse angeordnete werden. Der Filterbalg weist eine Anströmseite und eine Abströmseite auf, wobei "durchbrechende Aussparung" bedeutet, dass sich die Aussparung von der Anströmseite bis zur Abströmseite des Filterbalgs erstreckt. Mit anderen Worten stellt die durchbrechende Aussparung einen Durchbruch im Filterbalg dar.

Unter einem "Filterbalg" wird ein Körper aus Filtermedium verstanden. Der Filterbalg kann insbesondere als Balg aus gefaltetem Filtermedium, also als Faltenbalg, bereitgestellt werden. Der Begriff "Filterbalg" ist jedoch nicht hierauf beschränkt und umfasst auch sonstige Filtermediumkörper, beispielsweise poröse Formkörper, Wabenkörper oder gewellte Filtermediumkörper, insbesondere so genannte Kompaktfilter.

Gemäß einer günstigen Ausgestaltung des Filtersystems kann zumindest ein Gehäuseteil des Filtergehäuses eine gehäuseteilseitige Resonator-Gehäuseaufnahme aufweisen, in welche ein Resonator-Gehäuse-element zumindest teilweise hineinragt. Die gehäuseteilseitige Resonator-Gehäuseaufnahme kann das entsprechende Resonator-Gehäuseelement abstützen oder verstärken, wodurch die Stabilität des Resonator-Gehäuses verbessert werden kann. Zudem kann die gehäuseteilseitige Resonator-Gehäuseaufnahme das entsprechende Resonator-Gehäuseelement bei einem Zusammenführen der Resonator-Gehäuseelemente und/oder beim Einbau des Filterelements und/oder beim Zusammenführen der Gehäuseteile führen und dadurch das Montieren des Filtersystems erleichtern. Insbesondere kann das filterelementseitige Resonator-Gehäuseelement in der gehäuseteilseitigen Resonator-Gehäuseaufnahme geführt und gehalten sein.

Gemäß einer günstigen Ausgestaltung des Filtersystems kann wenigstens ein Resonator-Gehäuseelement jeweils einen Hohlraum für beide Kammern umschließen. Hierbei können mehrere solcher Resonator-Gehäuseelemente in Längsrichtung miteinander verbunden werden, um einen langen Hohlraum auszubilden. Alternativ kann ein solches Resonator-Gehäuseelement mit Resonator-Gehäuseelementen gekoppelt werden, welche jeweils den Hohlraum für eine Kammer ausbilden.

Gemäß einer günstigen Ausgestaltung des Filtersystems können wenigstens zwei Resonator-Gehäuseelemente jeweils einen Hohlraum für eine der beiden Kammern umschließen, wobei die Kammern der beiden Resonator-Gehäuseelemente im bestimmungsgemäßen Zustand nebeneinander angeordnet sind. Hierbei kann die Trennwand zwischen den beiden Kammern aus einander zugewandten Wänden der jeweiligen Resonator-Gehäuseelemente gebildet sein. Hierbei ist möglich; dass eine Kammer aus mehreren Resonator-Gehäuseelementen, welche miteinander verbunden sind, gebildet wird.

Gemäß einer günstigen Ausgestaltung des Filtersystems kann der wenigstens eine Durchbruch der Trennwand im Bereich des Resonatoreinlasses angeordnet sein. Insbesondere kann die Trennwand 25 den wenigstens einen Durchbruch in einem Bereich des Resonator-Gehäuses aufweisen, welcher in den Reinfluidbereich ragt. Alternativ oder zusätzlich kann die Trennwand den wenigstens einen Durchbruch in einem Bereich des Resonator-Gehäuses aufweisen, welcher in den Bereich des Filterelements und/oder welcher in den Bereich des Rohfluidbereichs ragt.

Gemäß einer günstigen Ausgestaltung des Filtersystems kann das Filterelement einen umlaufenden Rahmen umfassen. Der Rahmen kann einen Faltenbalg umschließen und zur Stabilität des Filterelements beitragen. Zudem kann der Rahmen mit wenigstens einem Gehäuseteil gekoppelt werden.

Gemäß einer günstigen Ausgestaltung des Filtersystems kann das Filtergehäuse zweiteilig ausgebildet sein, wobei ein Bodenelement den Nebenanschlussauslass aufweist. Hierbei kann das Bodenelement einen Großteil der den Rohfluidbereich umgebenden Wände ausbilden. Durch den zweiteiligen Aufbau können das Einführen und Entnehmen des Filterelements und das Reinigen des Filtergehäuses erleichtert werden.

Gemäß einer günstigen Ausgestaltung des Filtersystems kann das Bodenelement zudem den Haupteinlass aufweisen. Ein Deckelelement kann den Hauptauslass aufweisen. Das Filterelement kann in Strömungsrichtung zwischen dem Haupteinlass und den beiden Auslässen angeordnet sein. Hierbei strömt ein Fluid von dem Haupteinlass durch den Rohfluidbereich und durch einen in den Rohfluidbereich ragenden Faltenbalg des Filterelements in einen Reinfluidbereich. Von dort kann das Fluid durch den Hauptauslass aus dem Filtergehäuse strömen. Das Fluid kann auch durch den Resonatoreinlass in die erste Kammer der Resonatorstruktur strömen und von dort durch den Resonatorauslass aus dem Gehäuse strömen. Das gereinigte Fluid kann beispielsweise in einem weiteren System, welches gereinigtes Fluid, beispielsweise Luft benötigt, verwendet werden, beispielsweise in einem Bremssystem für Nutzfahrzeuge oder dergleichen. Des Weiteren kann eine Wechselwirkung des Fluids in der ersten Kammer mit der zweiten Kammer Störgeräusche im Filtergehäuse oder Störgeräusche am Nebenanschlussauslass reduzieren.

Vorteilhaft umfasst die Resonatorstruktur zur Geräuschdämpfung mehre Elemente, wenigstens zwei Resonator-Gehäuseelemente, welche einen Hohlraum von außen umschließen und eine einteilige oder mehrteilige Trennwand, welche den Hohlraum in zwei Kammern unterteil. Diese Elemente können an einem beliebigen Gehäuseteil oder dem Filterelement angeordnet sein. Mit einer solchen Anordnung lässt sich auf vorteilhafte Weise ein sogenannter Nebenschlussresonator darstellen, welcher zwei Volumina aufweist, die über Durchbrüche, beispielsweise Schlitze, im Trennwandelement zwischen den beiden Volumina akustisch gekoppelt sind. Ein solcher Resonator lässt sich auf sehr begrenztem Bauraum umsetzen und kann kostengünstig hergestellt werden.

Die Abdichtung der Resonatorstruktur und der Filtergehäuseteile kann über ein geeignetes Dichtmaterial, beispielsweise Polyurethan (PUR), erfolgen, welche beispielsweise an einen Rahmen des Filterelements angespitzt oder filtergehäuseteilseitig angespritzt sind. Alternativ kann das Dichtungselement auch ein separates Bauteil sein, welches am Filtergehäuseteil und/oder an dem Rahmen angeknüpft oder eingeknüpft ist. Dadurch kann der Innenraum des Filtergehäuses beim bestimmungsgemäßen Zusammenbau zuverlässig abgedichtet werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: eine Explosionsansicht eines Filtersystems nach einem ersten Ausführungsbeispiel der Erfindung mit einem Filterelement und zwei Gehäuseteilen;
- Fig. 2: eine Schnittdarstellung des Filtersystems aus Figur 1;
- Fig. 3: eine isometrische Ansicht von unten auf ein Deckelelement des Filtersystems aus Figuren 1 und 2;
- Fig. 4: eine isometrische Ansicht von unten auf ein Filterelement des Filtersystems aus Figuren 1 und 2;
- Fig. 5: eine isometrische Draufsicht auf ein Bodenelement des Filtersystems aus Figuren 1 und 2;
- Fig. 6: eine Explosionsansicht eines Filtersystems nach einem zweiten Ausführungsbeispiel der Erfindung mit einem Filterelement und zwei Gehäuseteilen;
- Fig. 7: eine Schnittdarstellung des Filtersystems aus Figur 6;
- Fig. 8: eine isometrische Ansicht von unten auf ein Deckelelement des Filtersystems aus Figuren 6 und 7;
- Fig. 9: eine isometrische Ansicht von unten auf ein Filterelement des Filtersystems aus Figuren 6 und 7;
- Fig. 10: eine isometrische Draufsicht auf ein Bodenelement des Filtersystems aus Figuren 6 und 7;
- Fig. 11: eine Explosionsansicht eines Filtersystems nach einem dritten Ausführungsbeispiel der Erfindung mit einem Filterelement und zwei Gehäuseteilen;
- Fig. 12: eine Schnittdarstellung des Filtersystems aus Figur 11;
- Fig. 13: eine isometrische Ansicht von unten auf ein Deckelelement des Filtersystems aus Figuren 11 und 12;
- Fig. 14: eine isometrische Ansicht von unten auf ein Filterelement des Filtersystems aus Figuren 11 und 12;
- Fig. 15: eine isometrische Draufsicht auf ein Bodenelement des Filtersystems aus Figuren 11 und 12;
- Fig. 16: eine Explosionsansicht eines Filtersystems nach einem vierten Ausführungsbeispiel der Erfindung mit einem Filterelement und zwei Gehäuseteilen;
- Fig. 17: eine Schnittdarstellung des Filtersystems aus Figur 16;
- Fig. 18: eine isometrische Ansicht von unten auf ein Deckelelement des Filtersystems aus Figuren 16 und 17;
- Fig. 19: eine isometrische Ansicht von unten auf ein Filterelement des Filtersystems aus Figuren 16 und 17;
- Fig. 20: eine isometrische Draufsicht auf ein Bodenelement des Filtersystems aus Figuren 16 und 17;
- Fig. 21: eine Explosionsansicht eines Filtersystems nach einem fünften Ausführungsbeispiel der Erfindung mit einem Filterelement und zwei Gehäuseteilen;
- Fig. 22: eine Schnittdarstellung des Filtersystems aus Figur 21;
- Fig. 23: eine isometrische Ansicht von unten auf ein Deckelelement des Filtersystems aus Figuren 21 und 22;
- Fig. 24: eine isometrische Ansicht von unten auf ein Filterelement des Filtersystems aus Figuren 21 und 22;
- Fig. 25: eine isometrische Draufsicht auf ein Bodenelement des Filtersystems aus Figuren 21 und 22;
- Fig. 26: eine Explosionsansicht eines Filtersystems nach einem sechsten Ausführungsbeispiel der Erfindung mit einem Filterelement und zwei Gehäuseteilen;
- Fig. 27: eine Schnittdarstellung des Filtersystems aus Figur 26;
- Fig. 28: eine isometrische Ansicht von unten auf ein Deckelelement des Filtersystems aus Figuren 26 und 27;
- Fig. 29: eine isometrische Ansicht von unten auf ein Filterelement des Filtersystems aus Figuren 26 und 27;
- Fig. 30: eine isometrische Draufsicht auf ein Bodenelement des Filtersystems aus Figuren 26 und 27;
- Fig. 31: eine Explosionsansicht eines Filtersystems nach einem siebten Ausführungsbeispiel der Erfindung mit einem Filterelement und zwei Gehäuseteilen;
- Fig. 32: eine Schnittdarstellung des Filtersystems aus Figur 31;
- Fig. 33: eine isometrische Ansicht von unten auf ein Deckelelement des Filtersystems aus Figuren 31 und 32;
- Fig. 34: eine isometrische Ansicht von unten auf ein Filterelement des Filtersystems aus Figuren 31 und 32;
- Fig. 35: eine isometrische Draufsicht auf ein Bodenelement des Filtersystems aus Figuren 31 und 32;
- Fig. 36: eine Explosionsansicht eines Filtersystems nach einem achten Ausführungsbeispiel der Erfindung mit einem Filterelement und zwei Gehäuseteilen;
- Fig. 37: eine Schnittdarstellung des Filtersystems aus Figur 36;
- Fig. 38: eine isometrische Ansicht von unten auf ein Deckelelement des Filtersystems aus Figuren 36 und 37;
- Fig. 39: eine isometrische Ansicht von unten auf ein Filterelement des Filtersystems aus Figuren 36 und 37;
- Fig. 40: eine isometrische Draufsicht auf ein Bodenelement des Filtersystems aus Figuren 36 und 37;
- Fig. 41: eine Explosionsansicht eines Filtersystems nach einem neunten Ausführungsbeispiel der Erfindung mit einem Filterelement und zwei Gehäuseteilen;
- Fig. 42: eine Schnittdarstellung des Filtersystems aus Figur 41;
- Fig. 43: eine isometrische Ansicht von unten auf ein Deckelelement des Filtersystems aus Figuren 41 und 42;
- Fig. 44: eine isometrische Ansicht von unten auf ein Filterelement des Filtersystems aus Figuren 41 und 42; und
- Fig. 45: eine isometrische Draufsicht auf ein Bodenelement des Filtersystems aus Figuren 41 und 42.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

Im Folgenden wird zunächst auf Gemeinsamkeiten der dargestellten Ausführungsbeispiele näher eingegangen. Im Anschluss werden die Ausführungsbeispiele einzeln beschrieben.

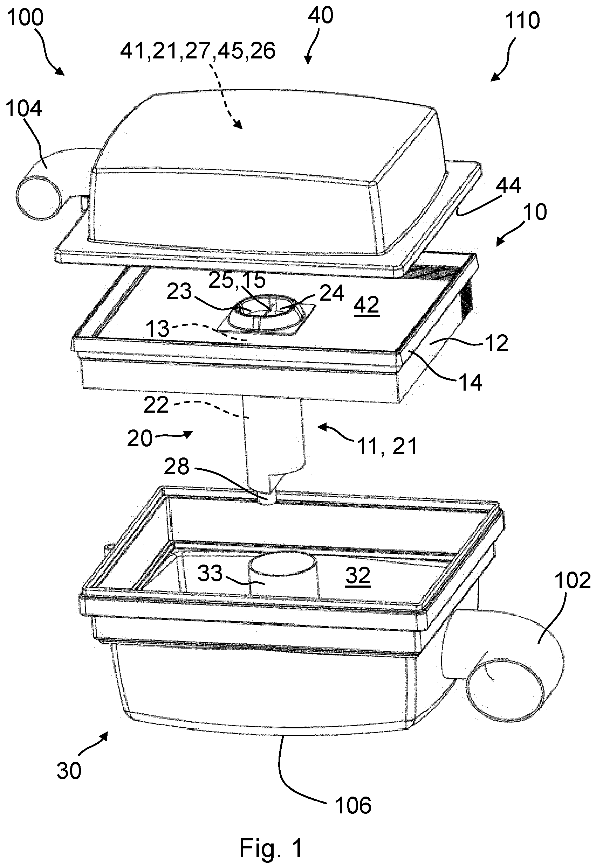

Wie aus Figuren 1, 2, 6, 7, 11, 12, 16, 17, 21, 22, 26, 27, 31, 32, 36, 37, 41 und 42 ersichtlich ist, umfassen die neun Ausführungsbeispiele des Filtersystems 100 jeweils ein Filtergehäuse 110, welches einen Innenraum umschließt, in welchem ein austauschbares Filterelement 10 und eine Resonatorstruktur 20 angeordnet sind.

Insbesondere kann die Resonatorstruktur 20 zur Geräuschdämpfung eines Nebenanschlussauslasses 106 ausgebildet sein.

Wie aus Figuren 1, 2, 6, 7, 11, 12, 16, 17, 21, 22, 26, 27, 31, 32, 36, 37, 41 und 42 weiter ersichtlich ist, ist das Filtergehäuse 110 in den dargestellten Ausführungsbeispielen zweiteilig ausgebildet und weist zwei Gehäuseteile 30, 40 auf. Das Filtergehäuse 110 umfasst in den dargestellten Ausführungsbeispielen ein Bodenelement 30 und ein Deckelelement 40. Im bestimmungsgemäßen Zustand sind das Bodenelement 30 und das Deckelelement 40 miteinander verbunden und umschließen den Innenraum. Das Filterelement 10 ist im bestimmungsgemäßen Zustand zwischen dem Bodenelement 30 und dem Deckelelement 40 angeordnet und unterteilt den Innenraum in einen Rohfluidbereich 32 und einen Reinfluidbereich 42. Dadurch sind im Innenraum vier Bereiche ausgebildet: der Rohfluidbereich 32, welcher an einen Bereich des Filterelements 10 und an einen Haupteinlass 102 anschließt, der Reinfluidbereich 42, welcher an einen anderen Bereich des Filterelements 10 und an einen Hauptauslass 104 anschließt, der Bereich, welchen das Filterelement 10 überspannt, und ein Bereich, in welchem die Resonatorstruktur 20 angeordnet ist. Die Bereiche sind durch Wände so umschlossen, dass das Fluid lediglich durch das Filterelement 10 von dem Rohfluidbereich 32 in den Reinfluidbereich 42 strömen kann. Des Weiteren gibt es keine Möglichkeit, für das Fluid direkt vom Rohfluidbereich 32 in die Resonatorstruktur 20 zu strömen.

In einem alternativen nicht dargestellten Ausführungsbeispiel des Filtersystems 100 kann das Filtergehäuse 110 auch einteilig ausgebildet sein. Zudem ist ein Filtergehäuse 110 mit mehr als zwei Gehäuseteilen 30, 40 vorstellbar. Des Weiteren sind anstelle eines Bodenelements 30 und eines Deckelelements 40 auch zwei Seitenelemente vorstellbar. Des Weiteren kann das Filterelement 10 in einer anderen geeigneten Weise im Filtergehäuse 110 angeordnet sein.

Wie aus Figuren 1, 2, 6, 7, 11, 12, 16, 17, 21, 22, 26, 27, 31, 32, 36, 37, 41 und 42 weiter ersichtlich ist, umfassen die neun Ausführungsbeispiele des Filtersystems 100 jeweils die Resonatorstruktur 20, wobei die Resonatorstruktur 20 ein mehrteiliges Resonator-Gehäuse 21 umfasst, welches im bestimmungsgemäßen Zustand einen Hohlraum 22 umschließt, welcher durch eine Trennwand 25 in zwei Kammern 23, 24 aufgeteilt ist. Die Endbereiche der Trennwand 25 liegen jeweils an wenigstens einer Wand des Resonator-Gehäuses 21 an. Dadurch kann Fluid nur über Durchbrüche 26 der Trennwand 25 von einer ersten Kammer 23 in eine zweite Kammer 24 gelangen, da verhindert wird, dass Fluid über einen Spalt zwischen Trennwand 25 und entsprechender Wand des Resonator-Gehäuses 21 von der ersten Kammer 23 in die zweite Kammer 24 gelangt. In den dargestellten Ausführungsbeispielen ist das Resonator-Gehäuse 21 senkrecht zum Filterelement 10 angeordnet. Zudem ragt das Resonator-Gehäuse 21 durch das Filterelement 10. Des Weiteren ragt das Resonator-Gehäuse 21 mit einem Endbereich in den Reinfluidbereich 42 hinein und ragt mit einem anderen Endbereich in den Rohfluidbereich 32 hinein. Der von dem Resonator-Gehäuse 21 umschlossene Hohlraum 22 ist nach außen geschlossen, so dass Fluid nur über einen Resonatoreinlass 27 in den Hohlraum 22 gelangen kann und nur über einen Resonatorauslass 28 aus dem Hohlraum 22 gelangen kann. In den dargestellten Ausführungsbeispielen ist die erste Kammer 23 länger als die zweite Kammer 24 ausgebildet. Zudem ist die erste Kammer 23 in Längsrichtung versetzt nach unten zur zweiten Kammer 24 angeordnet. Der Querschnitt der beiden Kammern 23, 24 ist im Wesentlichen identisch. Der Querschnitt und die Länge der zweiten Kammer können derart gestaltet werden, dass ein ausreichendes Volumen zur Schalldämpfung zur Verfügung steht und können individuell an die zu erwartenden Störgeräusche angepasst werden.

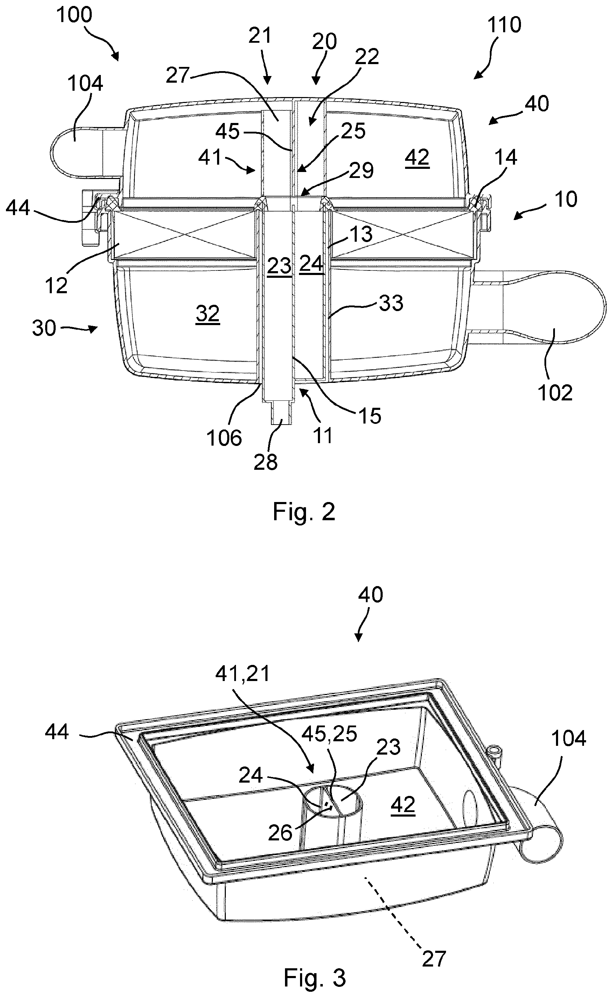

Wie aus Figuren 3, 8, 13, 18, 24, 26, 29, 31, 39, 41 weiter ersichtlich ist, umfasst die Trennwand 25 der Resonatorstruktur 20 wenigstens einen Durchbruch 26, über welchen die beiden Kammern 23, 24 akustisch gekoppelt sind. In den dargestellten Ausführungsbeispielen des erfindungsgemäßen Filtersystems 100 weist die Trennwand 25 mehrere Durchbrüche 26 auf. In einem alternativen nicht dargestellten Ausführungsbeispiel des Filtersystems 100 kann die Trennwand 25 auch nur einen Durchbruch 26 aufweisen. Die Durchbrüche 26 können eine an die akustischen Eigenschaften angepasste Form und Anordnung an der Trennwand 25 aufweisen.

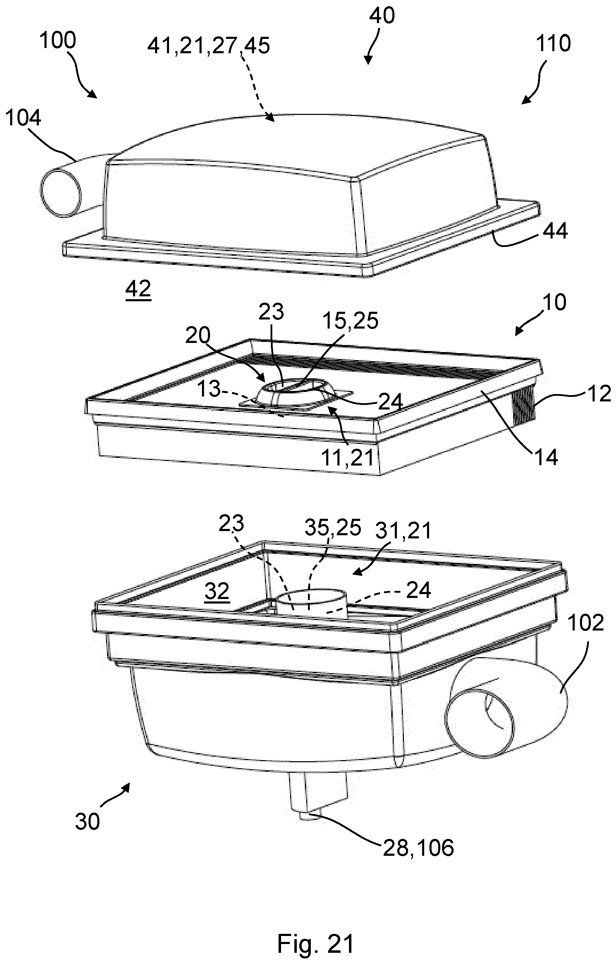

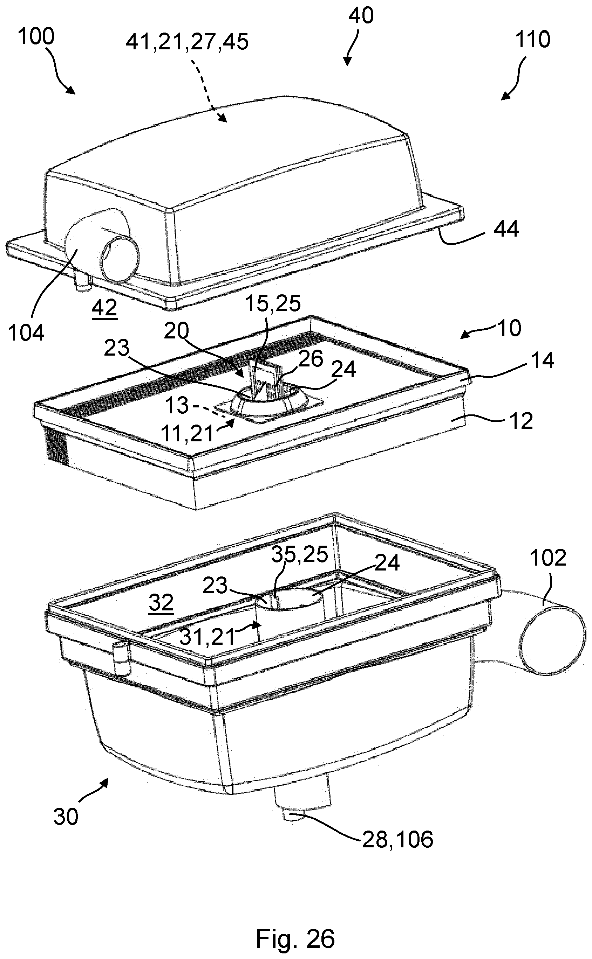

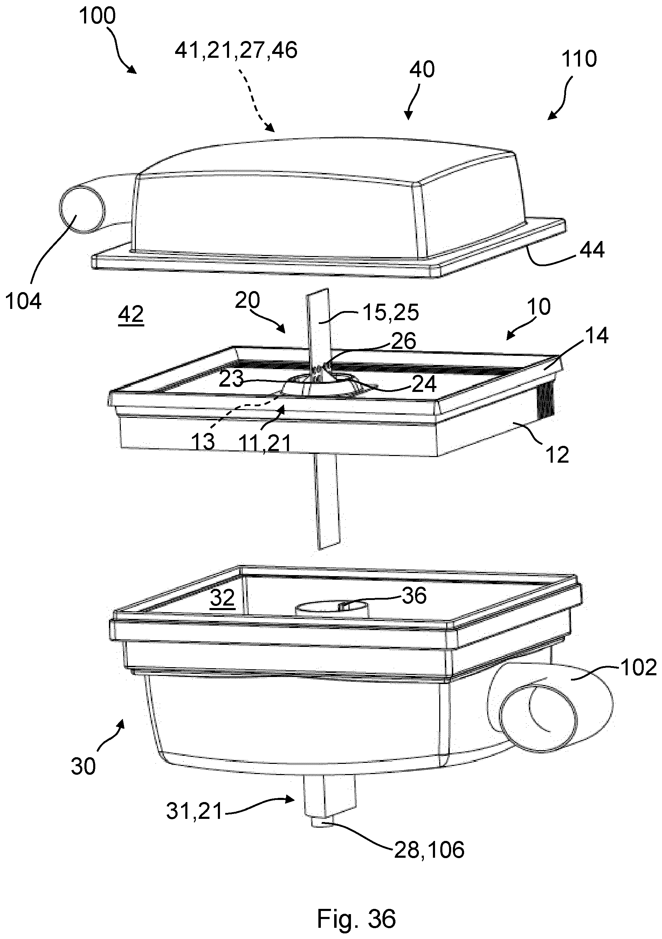

Die Durchbrüche 26 der Trennwand 25 sind im Bereich des Resonatoreinlasses 27 angeordnet. Außer im vierten Ausführungsbeispiel des Filtersystems (Figuren 21 bis 25), im fünften Ausführungsbeispiel des Filtersystems (Figuren 26 bis 30) und im achten Ausführungsbeispiel des Filtersystems (Figuren 36 bis 40) weist die Trennwand 25 die Durchbrüche 26 in einem Bereich des Resonator-Gehäuses 21 auf, welcher in den Reinfluidbereich 42 ragt. Im vierten Ausführungsbeispiel des Filtersystems (Figuren 21 bis 25), weist die Trennwand 25 die Durchbrüche 26 in einem Bereich des Resonator-Gehäuses 21 auf, welcher in den Bereich des Filterelements 10 ragt. Im fünften Ausführungsbeispiel des Filtersystems (Figuren 26 bis 30) weist die Trennwand 25 die Durchbrüche 26 in einem Bereich des Resonator-Gehäuses 21 auf, welcher in den Reinfluidbereich 42 und in den Bereich des Filterelements 10 ragt. Im achten Ausführungsbeispiel des Filtersystems (Figuren 36 bis 40) weist die Trennwand 25 die Durchbrüche 26 in einem Bereich des Resonator-Gehäuses 21 auf, welcher in den Reinfluidbereich 42 und in den Bereich des Filterelements 10 ragt. In einem alternativen nicht dargestellten Ausführungsbeispiel kann die Trennwand 25 die Durchbrüche 26 auch in einem Bereich des Resonator-Gehäuses 21 aufweisen, welcher in den Rohfluidbereich 32 oder in den Rohfluidbereich 31 und in den Bereich des Filterelements 10 ragt oder in den Rohfluidbereich, den Bereich des Filterelements 10 und in den Reinfluidbereich ragt. In den dargestellten Ausführungsbeispielen sind die Durchbrüche 26 rund oder oval ausgeführt und sind in Zeilen und Spalten an der Trennwand 25 angeordnet. In einem alternativen nicht dargestellten Ausführungsbeispiel können die Durchbrüche 26 auch als Schlitze ausgeführt sein, welche in Hochrichtung oder Querrichtung an der Trennwand 25 verlaufen. Die Trennwand 25 weist in den dargestellten Ausführungsbeispielen eine rechteckige Form auf, wobei eine Breite dem innen Durchmesser des Resonator-Gehäuses 21 und eine Länge, der Länge des Resonator-Gehäuses 21 entspricht.

Wie aus Figuren 1, 2, 5, 6, 7, 10, 11, 12, 15, 16, 17, 20, 21, 22, 25, 26, 27, 30, 31, 32, 35, 36, 37, 40, 41, 42 und 45 weiter ersichtlich ist, umfasst das Bodenelement 30 einen Nebenanschlussauslass 106. Zudem weist das Bodenelement 30 einen Haupteinlass 102 auf.

Wie aus Figuren 1, 2, 3, 6, 7, 8, 11, 12, 13, 16, 17, 18, 21, 22, 23, 26, 27, 28, 31, 32, 33, 36, 37, 38, 41, 42 und 43 weiter ersichtlich ist, weist das Deckelelement 40 einen Hauptauslass 104 auf. Das Filterelement 10 ist in Strömungsrichtung zwischen dem Haupteinlass 102 und den beiden Auslässen 104, 106 angeordnet.

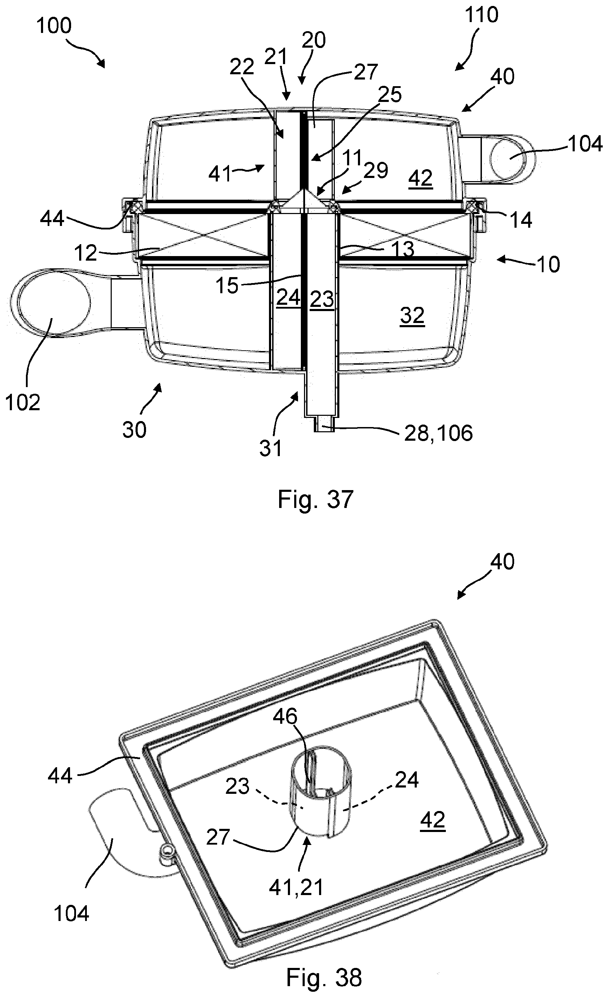

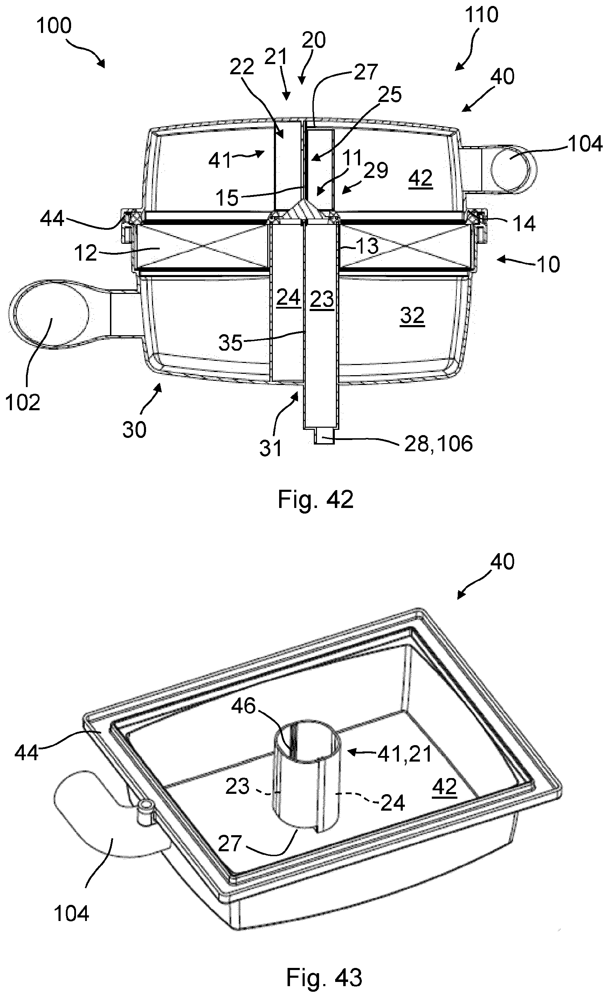

Wie aus Figuren 1, 2, 6, 7, 11, 12, 16, 17, 21, 22, 26, 27, 31, 32, 36, 37, 41 und 42 ersichtlich ist, umfasst das mehrteilige Resonator-Gehäuse 21 den Resonatoreinlass 27 und den Resonatorauslass 28, welche mit einer ersten Kammer 23 gekoppelt sind. Der Resonatoreinlass 27 ist im Reinfluidbereich 42 des Innenraums angeordnet. Der Resonatoreinlass 27 ist lediglich in den Figuren 38 und 43, deutlich zu erkennen. Hierbei ist ein deckelelementseitiges Resonator-Gehäuseelement 41 mit einer Decke des Deckelelements 40 verbunden und weist an einer den Hohlraum 22 umschließenden Wand eine Aussparung aus, so dass zwischen der Decke, welche den Hohlraum 22 von oben abdeckt und der Wand ein Spalt entsteht, durch welchen das Fluid aus dem Reinfluidbereich 42 in die erste Kammer 23 strömen kann. Der Resonatoreinlass 27 kann auch in einer anderen geeigneten Weise gestaltet werden, zudem kann der Resonatoreinlass 27 auch an einem anderen geeigneten Bereich des mehrteiligen Resonator-Gehäuses 21 angeordnet sein. Durch die Anordnung des Resonatoreinlasses 27 im Reinfluidbereich wird die erste Kammer 23 von gefilterten Fluid durchströmt. Hierbei können durch eine Wechselwirkung über die Durchbrüche 26 mit dem Fluid in einer zweiten Kammer 24 Störgeräusche gedämpft oder reduziert werden.

Wie aus Figuren 1, 2, 6, 7, 11, 12, 16, 17, 21, 22, 26, 27, 31, 32, 36, 37, 41 und 42 weiter ersichtlich ist, ist der Resonatorauslass 28 fluidisch mit der ersten Kammer 23 und dem Nebenanschlussauslass 106 des Filtergehäuses 110 gekoppelt. Dadurch kann die erste Kammer 23 als Durchgang zwischen dem Reinfluidbereich 42 und dem Nebenanschlussauslass 106 wirken. Der Resonatorauslass 28 weist in den dargestellten Ausführungsbeispielen einen runden Querschnitt auf, es sind aber auch andere geeignete Formen des Querschnitts, wie eckige oder ovale Formen des Querschnitts, möglich.

Durch den Aufbau des Filtersystems 100 gelangt ein zu filterndes Fluid über den Haupteinlass 102 in den Rohfluidbereich 32, durchströmt das Filterelement 10 und gelangt als gefiltertes Fluid in den Reinfluidbereich 42. Durch den Hauptauslass 104, welcher am Reinfluidbereich 42 angrenzt, kann das gefilterte Fluid zu einem entsprechenden Verbraucher geleitet werden. Des Weiteren kann das gefilterte Fluid durch die erste Kammer 23 der Resonatorstruktur 20 umgeleitet werden und unteranderem das Filterelement 10 und den Rohfluidbereich 42 durchqueren und durch den Nebenanschlussauslass 106 zu einem entsprechenden weiteren Verbraucher geleitet werden. Der weitere Verbraucher kann ein Kompressor in einem Bremssystem eines Lastkraftwagens sein. Beim Durchströmen der ersten Kammer 23 können durch die Wechselwirkung mit der zweiten Kammer 24 Störgeräusche gedämpft werden.

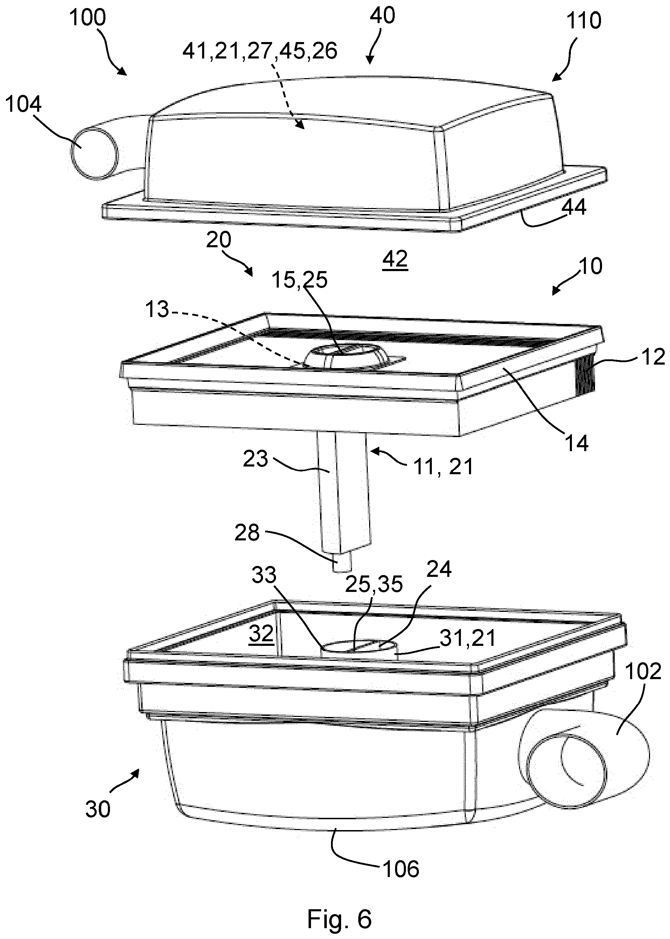

Wie aus Figuren 1, 2, 6, 7, 11, 12, 16, 17, 21, 22, 26, 27, 31, 32, 36, 37, 41 und 42 ersichtlich ist, umfassen die neun Ausführungsbeispiele des Filtersystems 100 jeweils zumindest ein Gehäuseteil 30, 40 des Filtergehäuses 110, welches ein Resonator-Gehäuseelement 31, 41 umfasst. Zudem umfasst das Filterelement 10 ein Resonator-Gehäuseelement 11, wobei die Resonator-Gehäuseelemente 41, 31, 11 im bestimmungsgemäßen Zustand das geschlossene mehrteilige Resonator-Gehäuse 21 ausbilden. Ein mit dem Filterelement 10 verbundenes Resonator-Gehäuseelement 11 und/oder Trennwandelement 15 ist mit dem Filterelement 10 austauschbar. In den dargestellten Ausführungsbeispielen des erfindungsgemäßen Filtersystems 100 weisen die Deckelelemente 40 jeweils ein deckelelementseitiges Resonator-Gehäuseelement 41 auf, welches im bestimmungsgemäßen Verwendungszustand mit dem filterelementseitigen Resonator-Gehäuseelement 11 verbunden ist. Bis auf das erste Ausführungsbeispiel, weisen alle anderen in den, in den Figuren 6 bis 45 dargestellten Ausführungsbeispiele des Filtersystems 100 ein bodenelementseitiges Resonator-Gehäuseelement 31 auf, welches im bestimmungsgemäßen Verwendungszustand mit dem filterelementseitigen Resonator-Gehäuseelement 11 verbunden ist. Hierbei sind die beiden oder die drei Resonator-Gehäuseelemente 11, 31, 41 so miteinander verbunden, dass das Fluid lediglich über den Resonatoreinlass 27 in den Hohlraum 22 gelangen und über lediglich den Resonator-Auslass 28 aus dem Hohlraum 22 gelangen kann. Insbesondere kann ein Dichtungselement in Verbindungsbereichen zwischen den Resonator-Gehäuseelementen 11, 31, 41 angeordnet sein.

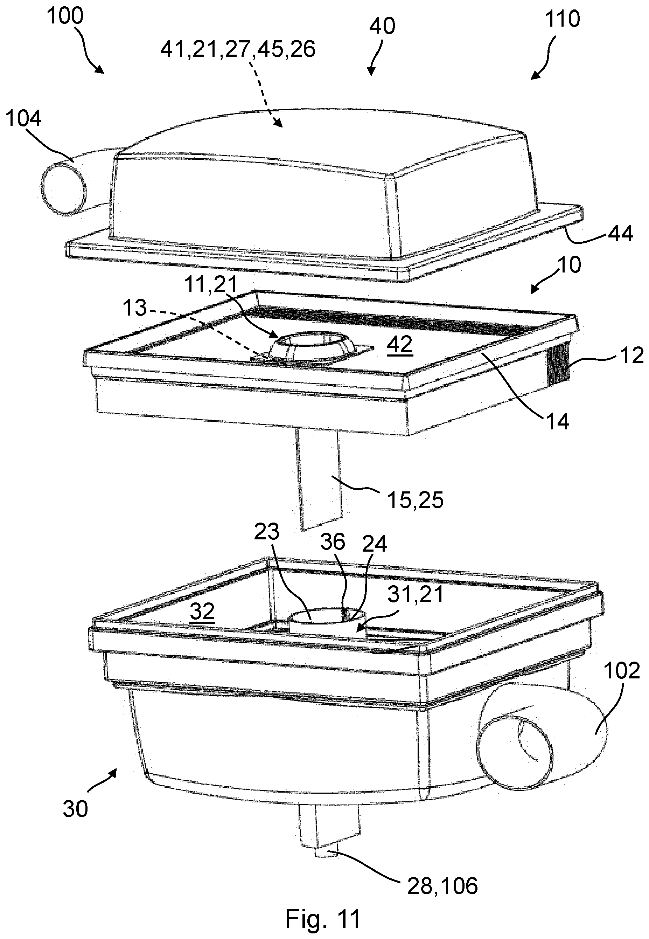

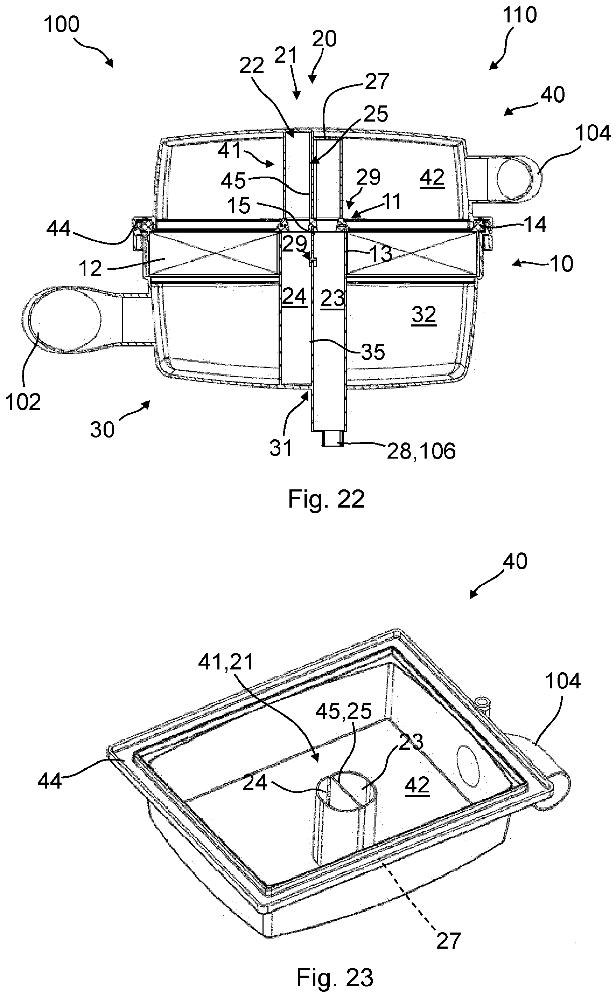

Wie aus Figuren 1, 2, 6, 7, 11, 12, 16, 17, 21, 22, 26, 27, 31, 32, 36, 37, 41 und 42 weiter ersichtlich ist, unterscheiden sich die dargestellten Ausführungsbeispiele des Filtersystems 100 unter anderem durch die Ausgestaltung der Trennwände 25. Die Trennwand 25 kann je nach Ausführungsbeispiel einteilig (Figuren 36 und 37) oder mehrteilig (Figuren 1, 2, 6, 7, 11, 12, 16, 17, 21, 22, 26, 27, 31, 32, 41 und 42) ausgeführt sein. Hierbei kann, wie aus Figuren 11, 12, 14, 24, 26, 27, 31, 32, 36, 37, 39, 41, 42 ersichtlich ist, wenigstens ein Trennwandelement 15, 35, 45 der Trennwand 25 mit einem der Resonator-Gehäuseelemente 11, 31, 41 verbunden sein und aus dem entsprechenden Resonator-Gehäuseelement 11, 31, 41 herausragen und im bestimmungsgemäßen Zustand in wenigstens ein weiteres Resonator-Gehäuseelement 11, 31, 41 hineinragen. Bei der einteiligen oder mehrteiligen Ausführung der Trennwand 25 mit wenigstens einem aus dem entsprechenden Resonator-Gehäuseelement 11, 31, 41 herausragen Trennwandelement 15, 35, 45 kann ein Resonator-Gehäuseelement 11, 31, 41 ohne Trennwandelement 15, 35, 45 oder mit kürzerem Trennwandelement 15, 35, 45 ausgebildet werden, und das andere aus dem anderen Resonator-Gehäuseelement 11, 31, 41 ragende Trennwandelement 15, 35, 45, aufnehmen (Figuren 11, 26, 27, 36, 37, 41 und 42). Dadurch können bei einer mehrteiligen Ausgestaltung der Trennwand 25 in einem Resonator-Gehäuseelement 11, 31, 41 mehrere Trennwandelemente 15, 35, 45 angeordnet sein. Zusätzlich oder alternativ können bei einer mehrteiligen Ausgestaltung der Trennwand 25 wenigstens zwei Resonator-Gehäuseelemente 11, 31, 41 jeweils mit einem Trennwandelement 15, 35, 45 verbunden sein, welche im bestimmungsgemäßen Zustand die Trennwand 25 ausbilden. Hierbei kann eine benachbarte Trennwandelemente 15, 35, 45 verbindende Verbindungsanordnung 29 Verbindungselemente aufweisen, welche aus wenigstens einem Resonator-Gehäuseelement 11, 31, 41 herausragen, um in ein anderes Resonator-Gehäuseelement 11, 31, 41 hineinzuragen und die entsprechenden Trennwandelemente 15, 35, 45 miteinander zu verbinden (Figuren 1, 2, 6, 7, 9, 10, 16, 17, 21, 22, 41 und 42). Alternativ kann ein Trennwandelement 15, 35, 45, welches mit einem Resonator-Gehäuseelement 11, 31, 41 verbunden ist, in ein anderes Resonator-Gehäuseelement 11, 31, 41 hineinragen und mit dem mit diesen Resonator-Gehäuseelement 11, 31, 41 verbundenen Trennwandelement 15, 35, 45 verbunden werden (Figuren 22, 26, 27, 31 und 32). Wie aus Figuren 11, 15, 26, 28, 30, 36, 38, 40 und 43 weiter ersichtlich ist weisen Resonator-Gehäuseelemente 11, 31, 41, in welche ein Trennwandelement 15, 35, 45 hineinragt, eine Trennwandelementhaltung 36, 46 auf. Die Trennwandelementhalterungen 36, 46 sind in den dargestellten Ausführungsbeispielen als Nut ausgebildet und verlaufen zumindest an gegenüberliegenden Seitenwandbereichen des entsprechenden Resonator-Gehäuseelementes 31, 41. In einem nicht dargestellten Ausführungsbeispiel ist in den Trennwandelementhalterungen 36, 46 ein Dichtungselement angeordnet.

Wie aus Figuren 1, 2, 4, 6, 7, 9, 11, 12, 14, 16, 17, 19, 21, 22, 24, 26, 27, 19, 31, 32, 34, 36, 37, 39, 41 und 42 weiter ersichtlich ist, umfasst das Filterelement 10 in den dargestellten Ausführungsbeispielen einen umlaufenden Rahmen 14. Dieser Rahmen 14 umschließt einen Faltenbalg 12. Rahmenelemente des Rahmens 14 liegen jeweils im bestimmungsgemäßen Zustand an einer Wand von wenigstens einem Gehäuseteil 30, 40 des Filtergehäuses 110 an. Alternativ kann wenigstens ein Gehäuseteil 30, 40 eine Ausbuchtung aufweisen, auf welcher der Rahmen 14 aufliegen kann. Am Rahmen 14 kann ein Dichtungselement angeordnet sein, welches den Bereich zwischen den Rahmenelementen und der jeweiligen Wand oder Ausbuchtung abdichtet, so dass kein Fluid vom Rohfluidbereich 32 in den Reinfluidbereich 42 gelangt, ohne durch den Faltenbalg 12 zu strömen.

Der Faltenbalg 12 ist in den dargestellten Ausführungsbeispielen an einer Unterseite des Rahmens 14 mit dem Rahmen 14 verbunden. Flächen der Rahmenelemente verlaufen senkrecht zur Oberseite und zur Unterseite des Faltenbalgs 12. Schmalseiten der Rahmenelemente verlaufen jeweils parallel zur Oberseite und zur Unterseite des Faltenbalgs 12. Zudem weisen der Faltenbalg 12 und der Rahmen 14 einen rechteckigen Querschnitt auf. Des Weiteren sind die Abmessungen der Querschnitte in den dargestellten Ausführungsbeispielen so gestaltet, dass der Querschnitt des Faltenbalgs 12 an einen Querschnitt des Rohfluidbereichs 32 des Filtergehäuses 110 angepasst ist. Dadurch wird in den dargestellten Ausführungsbeispielen im bestimmungsgemäßen Verwendungszustand der Rohfluidbereich 32 durch den Faltenbalg 12 abgedeckt.

Der Faltenbalg 12 kann in einem alternativen nicht dargestellten Ausführungsbeispiel einen anderen geeigneten Querschnitt aufweisen. Der Querschnitt des Faltenbalgs kann kreisrund, rechteckig, dreieckig, mehreckig, oval oder dergleichen sein und kann günstig an einen vorhandenen Bauraum angepasst werden. Zudem kann sich der Querschnitt entlang einer Achse verändern. Der Faltenbalg 12 kann ein gefaltetes Filtermedium oder gewickelte Lagen von Filtermedium umfassen. Auch eine Kombination von gefalteten und gewickelten Filtermedien ist möglich. Der Faltenbalg 12 ragt im bestimmungsgemäßen Verwendungszustand in einen Rohfluidbereich 32 des Filtergehäuses 110.

Wie aus Figuren 1, 2, 4, 6, 7, 9, 11, 12, 14, 16, 17, 19, 21, 22, 24, 26, 27, 19, 31, 32, 34, 36, 37, 39, 41 und 42 weiter ersichtlich ist, weist der Faltenbalg 12 des Filterelements 10 eine Aussparung auf, welche eine filterelementseitige Resonator-Gehäuseaufnahme 13 ausbildet, in welcher im bestimmungsgemäßen Zustand ein Resonator-Gehäuseelement 11, 31, 41 angeordnet ist. Die Aussparung des Filterbalgs 12 erstreckt sich von einer Anströmseite des Filterbalgs 12 bis zu einer Abströmseite des Filterbalgs 12, so dass der Filterbalg 12 durch die Aussparung vollständig durchbrochen wird. Hierbei ist insbesondere das filterelementseitige Resonator-Gehäuseelement 11 in der filterelementseitigen Resonator-Gehäuseaufnahme 13 angeordnet. In weiteren Ausführungsbeispielen ragt zusätzlich das bodenelementseitige Resonator-Gehäuseelement 35 ebenfalls in die filterelementseitige Resonator-Gehäuseaufnahme 13. In einem alternativen nicht dargestellten Ausführungsbeispiel kann zusätzlich oder alternativ auch ein deckelelementseitiges Resonator-Gehäuseelement 41 in die filterelementseitige Resonator-Gehäuseaufnahme 13 hineinragen.

Wie aus Figuren 1, 2, 5, 6, 7, 10 weiter ersichtlich ist, kann in einem weiteren Ausführungsbeispiel zumindest ein Gehäuseteil 30, 40 des Filtergehäuses 110 eine Resonator-Gehäuseaufnahme 33 aufweisen, in welche ein Resonator-Gehäuseelement 41, 31, 11 zumindest teilweise hineinragt. In den in Figuren 1, 2, 5, 6, 7, 10 dargestellten Ausführungsbeispielen weist das Bodenelement 30 die Resonator-Gehäuseaufnahme 33 auf und nimmt das filterelementseitige Resonator-Gehäuseelement 11 auf. In einem alternativen nicht dargestellten Ausführungsbeispiel kann auch das Deckelelement 40 eine Resonator-Gehäuseaufnahme 33 aufweisen und kann dadurch ein filterelementseitiges Resonator-Gehäuseelement 11 aufnehmen.

Wie aus Figuren 1-5, 8, 11-15, 16-20, 21-25, 26-30, 31-35, 36-40, 41-45 weiter ersichtlich ist, umschließt wenigstens ein Resonator-Gehäuseelement 41, 31, 11 jeweils einen Hohlraum für beide Kammern 23, 24.

Wie aus Figuren 6, 7, 9 und 10 weiter ersichtlich ist, können in dem dargestellten zweiten Ausführungsbeispiel der Filteranordnung 100, wenigstens zwei Resonator-Gehäuseelemente 41, 11 jeweils einen Hohlraum für eine der beiden Kammern 23, 24 oder einen Abschnitt für eine der beiden Kammern 23, 24 umschließen. Die Kammern 23, 24 der beiden Resonator-Gehäuseelemente 41, 11 sind im bestimmungsgemäßen Zustand nebeneinander angeordnet. Eine dem anderen Resonator-Gehäuseelement 41, 11 zugewandte Wand bildet einen Abschnitt der Trennwand 25 aus.

Wie aus Figuren 2, 3, 7, 8, 12, 13, 17, 18, 22, 23, 27, 28, 32, 33, 37, 38, 42 und 43 weiter ersichtlich ist, weisen die dargestellten Deckelelemente 40 jeweils an einem dem Bodenelement 30 zugewandten Endbereich einen Aufnahmebereich 44 auf. Der Aufnahmebereich 44 ist als Rille oder als Nut ausgebildet und ist umlaufend am Deckelelement 40 angeordnet. Der Aufnahmebereich 44 ist gegenüberliegend zum Rahmen 14 des Filterelements 10 angeordnet. Der Aufnahmebereich 44 nimmt im bestimmungsgemäßen Verwendungszustand den Rahmen 14 des Filterelements 10 und einen umlaufenden Rand des Bodenelements 30 auf. Die Gehäuseteile 30, 40 können zudem Verbindungselemente aufweisen, um im bestimmungsgemäßen Verwendungszustand miteinander verbunden zu werden.

Im Folgenden wird auf die einzelnen in den Figuren dargestellten Ausführungsbeispiele näher eingegangen.

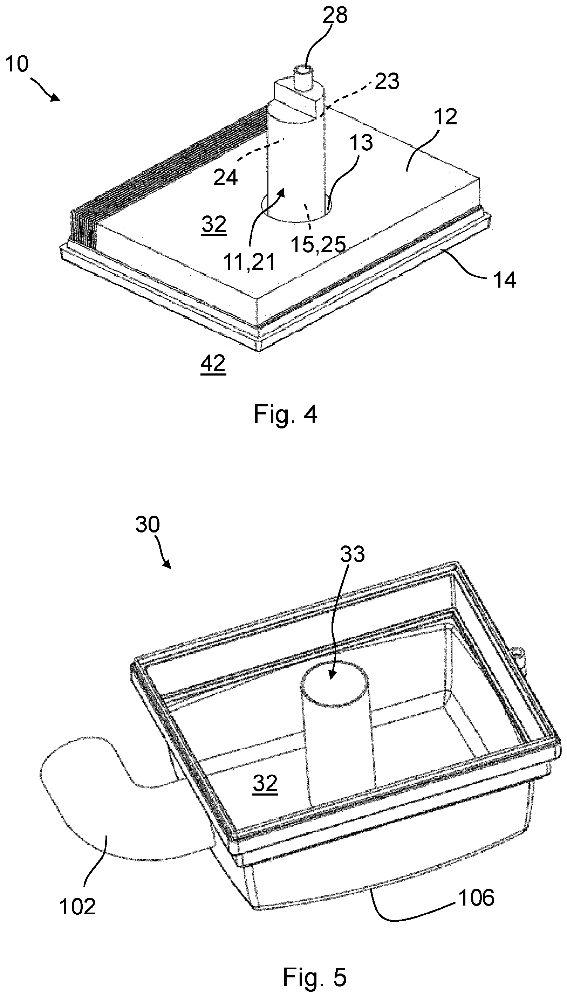

Figuren 1 bis 5 zeigen ein Filtersystem 100 nach einem ersten Ausführungsbeispiel der Erfindung. Hierbei zeigt Figur 1 eine Explosionsansicht des Filtersystems 100 mit einem Filterelement 10 und zwei Gehäuseteilen 30, 40. Figur 2 zeigt eine Schnittdarstellung des Filtersystems 100. Figur. 3 zeigt eine isometrische Ansicht von unten auf ein Deckelelement 40 des Filtersystems 100. Figur 4 zeigt eine isometrische Ansicht von unten auf ein Filterelement 10 des Filtersystems 100. Figur 5 zeigt eine isometrische Draufsicht auf ein Bodenelement 30 des Filtersystems 100.

Wie aus Figuren 1 bis 3 ersichtlich ist, weist das Deckelelement 40 ein zylinderförmiges nach unten offenes deckelelementseitiges Resonator-Gehäuseelement 41 auf. Das deckelelementseitige Resonator-Gehäuseelement 41 umfasst ein deckelelementseitiges Trennwandelement 45 und den nicht erkennbaren Resonatoreinlass 27. Das deckelelementseitige Resonator-Gehäuseelement 41 ist fest mit dem Deckelelement 40 verbunden. Das deckelelementseitige Trennwandelement 45 ist fest mit dem deckelelementseitigen Resonator-Gehäuseelement 41 verbunden.

Wie aus Figur 3 weiter ersichtlich, weist das deckelelementseitige Trennwandelement 45 an einem dem Filterelement 10 zugewandten Endbereich zwei Durchbrüche 26 auf. Die Durchbrüche 26 weisen Abmessungen auf, welche an wenigstens eine vorgegebene Frequenz der Resonatorstruktur 20 angepasst sind. Es sind auch andere Formen und Anzahlen der Durchbrüche 26 möglich.

Wie aus Figuren 1, 2 und 4 ersichtlich ist, weist das Filterelement ein zylinderförmiges nach oben offenes filterelementseitiges Resonator-Gehäuseelement 11 auf. Die Länge des filterelementseitigen Resonator-Gehäuseelements 11 entspricht in etwa einer Höhe zwischen einem Boden des Bodenelements 30 und einer Unterseite des Faltenbalgs mit der Dicke des Faltenbalgs 12. Der Faltenbalg 12 weist eine filterelementseitige Resonator-Gehäuseaufnahme 13 auf, in welcher ein Abschnitt des filterelementseitigen Resonator-Gehäuseelements 11 angeordnet ist.

Die offenen Endbereiche des filterelementseitigen Resonator-Gehäuseelements 11 und des deckelelementseitigen Resonator-Gehäuseelements 41 sind aneinander angepasst, so dass die Resonator-Gehäuseelemente 11, 41 ein dichtes Resonator-Gehäuse 21 ausbilden. Der dem Bodenelement 30 zugewandte Endbereich des filterelementseitigen Resonator-Gehäuseelements 11 weist den Resonatorauslass 28 auf. Das filterelementseitige Resonator-Gehäuseelement 11 umfasst ein filterelementseitiges Trennwandelement 15. Das filterelementseitige Resonator-Gehäuseelement 11 kann fest oder lösbar mit dem Filterelement 10 verbunden sein. Das filterelementseitige Trennwandelement 15 kann fest oder lösbar mit filterelementseitige Resonator-Gehäuseelement 11 verbunden sein.

Wie aus Figuren 1, 2 und 5 weiter ersichtlich ist, weist das Bodenelement 30 eine bodenelementseitige Resonator-Gehäuseaufnahme 33 auf. Im Bereich der bodenelementseitigen Resonator-Gehäuseaufnahme 33 weist der Boden des Bodenelements 30 den Nebenanschlussauslass 106 auf.

Wie aus Figur 2 weiter ersichtlich ist, ist ein Abschnitt des filterelementseitigen Resonator-Gehäuseelements 11 in der bodenelementseitigen Resonator-Gehäuseaufnahme 33 angeordnet. Der Resonatorauslass 28 ragt durch den Nebenanschlussauslass 106.

Wie aus Figur 2 weiter ersichtlich ist, weist das filterelementseitige Resonator-Gehäuseelement 11 Verbindungselemente einer Verbindungsanordnung 29 auf, welche die Trennwandelemente 15, 45 und die Resonator-Gehäuseelemente 11, 31 miteinander verbindet. Die Trennwand 25 wird im dargestellten Ausführungsbeispiel von dem filterelementseitigen Trennwandelement 15 und dem deckelelementseitigen Trennwandelement 45 ausgebildet.

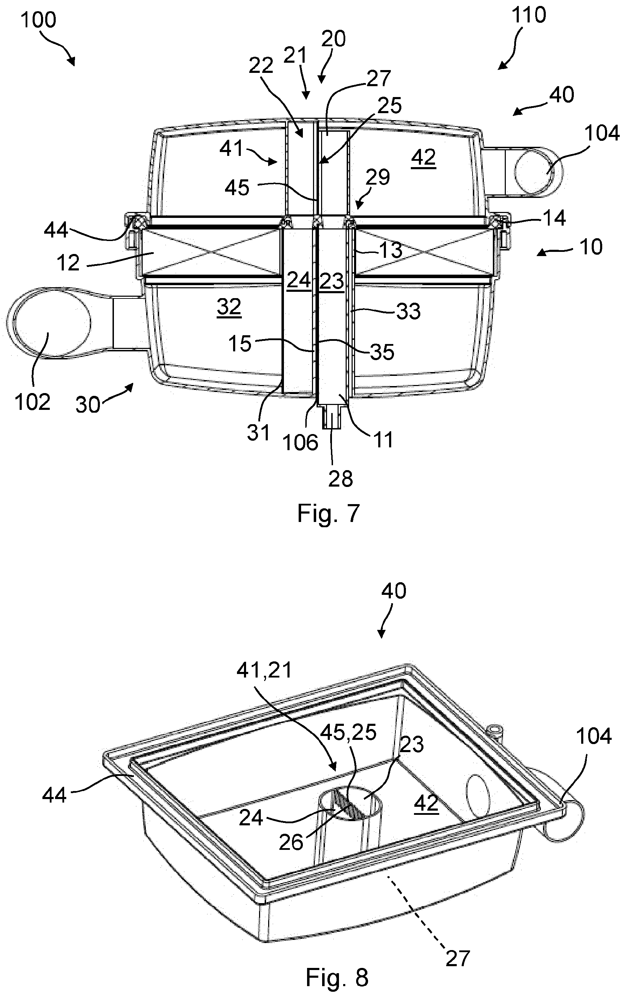

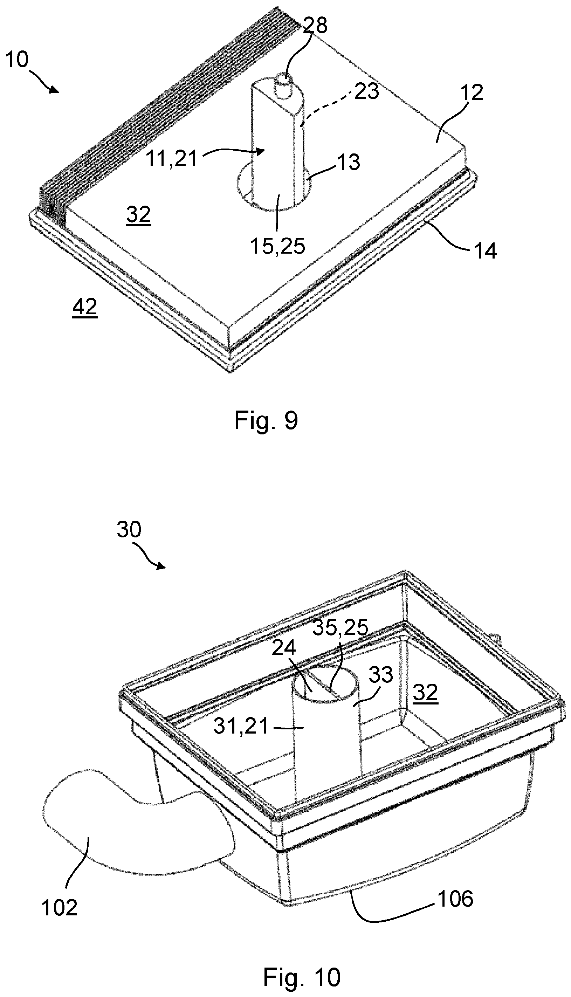

Figuren 6 bis 10 zeigen ein Filtersystem 100 nach einem zweiten Ausführungsbeispiel der Erfindung. Hierbei zeigt Figur 6 eine Explosionsansicht des Filtersystems 100 mit einem Filterelement 10 und zwei Gehäuseteilen 30, 40. Figur 7 zeigt eine Schnittdarstellung des Filtersystems 100. Figur. 8 zeigt eine isometrische Ansicht von unten auf ein Deckelelement 40 des Filtersystems 100. Figur 9 zeigt eine isometrische Ansicht von unten auf ein Filterelement 10 des Filtersystems 100. Figur 10 zeigt eine isometrische Draufsicht auf ein Bodenelement 30 des Filtersystems 100.

Wie aus Figuren 6 bis 8 ersichtlich ist, weist das Deckelelement 40 ein zylinderförmiges nach unten offenes deckelelementseitiges Resonator-Gehäuseelement 41 auf. Das deckelelementseitige Resonator-Gehäuseelement 41 umfasst ein deckelelementseitiges Trennwandelement 45 und den nicht erkennbaren Resonatoreinlass 27. Das deckelelementseitige Resonator-Gehäuseelement 41 ist fest mit dem Deckelelement 40 verbunden. Das deckelelementseitige Trennwandelement 45 ist fest mit dem deckelelementseitigen Resonator-Gehäuseelement 41 verbunden.

Wie aus Figur 8 weiter ersichtlich, weist das deckelelementseitige Trennwandelement 45 an einem dem Filterelement 10 zugewandten Endbereich eine gitterartige Struktur auf, welche die Durchbrüche 26 ausbildet. Die Durchbrüche 26 weisen Abmessungen auf, welche an wenigstens eine vorgegebene Frequenz der Resonatorstruktur 20 angepasst sind. Es sind auch andere Formen und Anzahlen der Durchbrüche 26 möglich.

Wie aus Figuren 6, 7 und 9 ersichtlich ist, weist das Filterelement ein nach oben offenes filterelementseitiges Resonator-Gehäuseelement 11 auf. Der dem Deckelelement 40 zugewandte Endbereich und ein durch den Filterbalg 12 verlaufender Abschnitt des filterelementseitigen Resonator-Gehäuseelements 11 weisen einen Runden Querschnitt auf. Ein im Rohfluidbereich 32 verlaufender Abschnitt des filterelementseitigen Resonator-Gehäuseelements 11 weist einen halbrunden Querschnitt auf. Hierbei geht das filterelementseitige Trennwandelement 15, welches den runden Querschnitt in zwei halbrunde Querschnitte teilt, in eine Außenwand des Abschnitts mit dem halbrunden Querschnitt über. Der Abschnitt mit dem halbrunden Querschnitt weist lediglich die erste Kammer 21 auf.

Die Länge des filterelementseitigen Resonator-Gehäuseelements 11 entspricht in etwa einer Höhe zwischen einem Boden des Bodenelements 30 und einer Unterseite des Faltenbalgs 12 mit der Dicke des Faltenbalgs 12. Der Faltenbalg 12 weist eine filterelementseitige Resonator-Gehäuseaufnahme 13 auf, in welcher der Abschnitt des filterelementseitigen Resonator-Gehäuseelements 11 mit runden Querschnitt und zwei Kammern 23, 24 angeordnet ist.

Die offenen Endbereiche des filterelementseitigen Resonator-Gehäuseelements 11 und des deckelelementseitigen Resonator-Gehäuseelements 41 sind aneinander angepasst, so dass die Resonator-Gehäuseelemente 11, 41 ein dichtes Resonator-Gehäuse 21 ausbilden. Der dem Bodenelement 30 zugewandte Endbereich des filterelementseitigen Resonator-Gehäuseelements 11 weist den Resonatorauslass 28 auf.

Wie aus Figuren 6, 7 und 10 weiter ersichtlich ist, weist das Bodenelement 30 eine bodenelementseitige Resonator-Gehäuseaufnahme 33 und ein bodenelementseitiges Resonator-Gehäuseelement 31 auf. Im Bereich der bodenelementseitigen Resonator-Gehäuseaufnahme 33 weist der Boden des Bodenelements 30 den Nebenanschlussauslass 106 auf. Der Bereich des filterelementseitigen Resonator-Gehäuseelements 11, welcher die erste Kammer 23 ausbildet, ragt in die bodenelementseitige Resonator-Gehäuseaufnahme 33. Der Resonatorauslass 28 ragt durch den Nebenanschlussauslass 106. Benachbart zur bodenelementseitigen Resonator-Gehäuseaufnahme 33 ist das bodenelementseitige Resonator-Gehäuseelement 31 angeordnet, so dass die zweite Kammer 24 neben der ersten Kammer 23 angeordnet ist. Ein dem Filterelement 10 zugewandter Endbereich des bodenelementseitigen Resonator-Gehäuseelements 31 ist mit dem filterelementseitigen Resonator-Gehäuseelement 11 verbunden.

Wie aus Figur 7 weiter ersichtlich ist, weist das filterelementseitige Resonator-Gehäuseelement 11 Verbindungselemente einer Verbindungsanordnung 29 auf, welche die Trennwandelemente 11, 41 und die Resonator-Gehäuseelemente 11, 31, 41 miteinander verbindet. Die Trennwand 25 wird im dargestellten Ausführungsbeispiel von dem deckelelementseitigen Trennwandelement 45, dem filterelementseitigen Trennwandelement, 15 und einer Wand der bodenelementseitigen Resonator-Gehäuseaufnahme 33 ausgebildet.

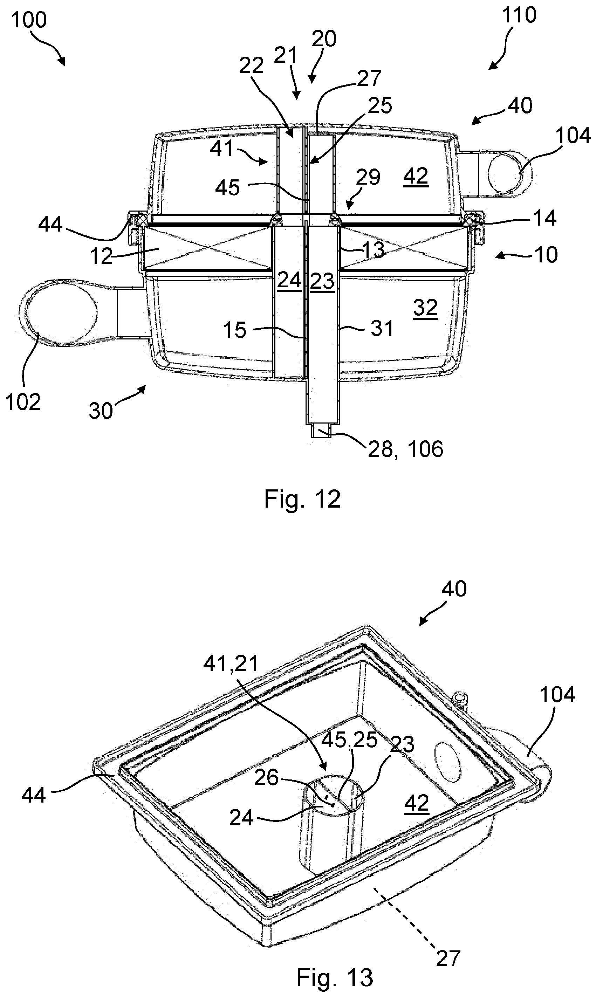

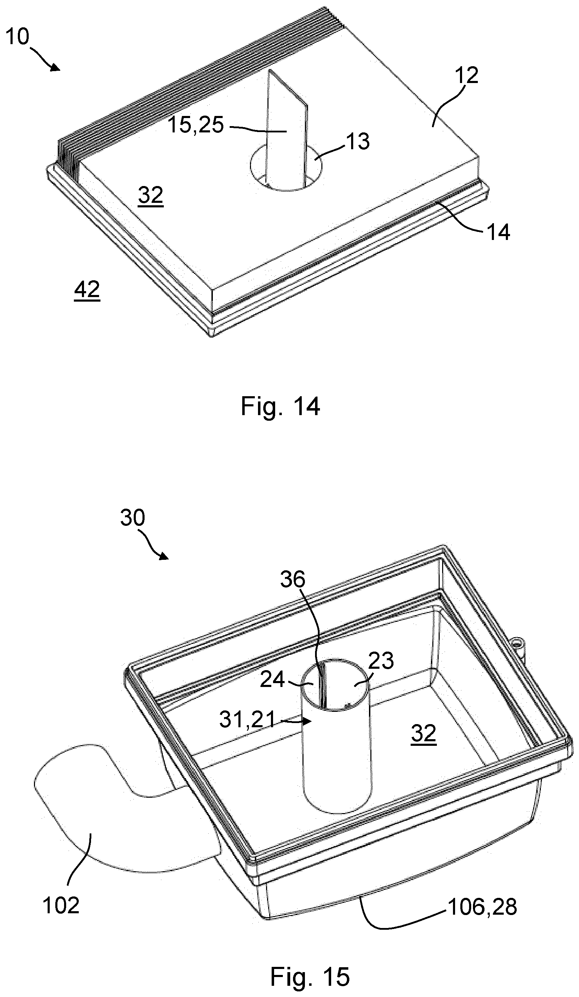

Figuren 11 bis 15 zeigen ein Filtersystem 100 nach einem dritten Ausführungsbeispiel der Erfindung. Hierbei zeigt Figur 11 eine Explosionsansicht des Filtersystems 100 mit einem Filterelement 10 und zwei Gehäuseteilen 30, 40. Figur 12 zeigt eine Schnittdarstellung des Filtersystems 100. Figur. 13 zeigt eine isometrische Ansicht von unten auf ein Deckelelement 40 des Filtersystems 100. Figur 14 zeigt eine isometrische Ansicht von unten auf ein Filterelement 10 des Filtersystems 100. Figur 15 zeigt eine isometrische Draufsicht auf ein Bodenelement 30 des Filtersystems 100.

Wie aus Figuren 11 bis 13 ersichtlich ist, weist das Deckelelement 40 ein zylinderförmiges nach unten offenes deckelelementseitiges Resonator-Gehäuseelement 41 auf. Das deckelelementseitige Resonator-Gehäuseelement 41 umfasst ein deckelelementseitiges Trennwandelement 45 und den nicht erkennbaren Resonatoreinlass 27. Das deckelelementseitige Resonator-Gehäuseelement 41 ist fest mit dem Deckelelement 40 verbunden. Das deckelelementseitige Trennwandelement 45 ist fest mit dem deckelelementseitigen Resonator-Gehäuseelement 41 verbunden.

Wie aus Figur 13 weiter ersichtlich, weist das deckelelementseitige Trennwandelement 45 an einem dem Filterelement 10 zugewandten Endbereich zwei Durchbrüche 26 auf. Die Durchbrüche 26 weisen Abmessungen auf, welche an wenigstens eine vorgegebene Frequenz der Resonatorstruktur 20 angepasst sind. Es sind auch andere Formen und Anzahlen der Durchbrüche 26 möglich.

Wie aus Figuren 11, 12 und 14 ersichtlich ist, weist das Filterelement 10 ein nach oben und unten offenes zylinderförmiges filterelementseitiges Resonator-Gehäuseelement 11 auf. Das filterelementseitige Resonator-Gehäuseelement 11 weist eine geringe Höhe auf und ragt nicht aus der filterelementseitigen Resonator-Gehäuseaufnahme 13 heraus.

Die offenen einander zugewandten Endbereiche des filterelementseitigen Resonator-Gehäuseelements 11 und des deckelelementseitigen Resonator-Gehäuseelements 41 sind aneinander angepasst, so dass die Resonator-Gehäuseelemente 11, 41 einen dichten Resonator-Gehäuseabschnitt ausbilden.

Wie aus Figuren 11, 12 und 15 weiter ersichtlich ist, weist das Bodenelement 30 ein zylinderförmiges bodenelementseitiges Resonator-Gehäuseelement 31 auf. Das bodenelementseitige Resonator-Gehäuseelement 31 weist eine Öffnung auf, welche den Nebenanschlussauslass 106 und den Resonatorauslass 28 ausbilden.

Ein dem Filterelement 10 zugewandter Endbereich des bodenelementseitigen Resonator-Gehäuseelements 31 ist mit dem filterelementseitigen Resonator-Gehäuseelement 11 verbunden. Der dem Bodenelement 30 zugewandte offene Endbereich des filterelementseitigen Resonator-Gehäuseelements 11 und der offene dem Filterelement 10 zugewandte Endbereich des bodenelementseitigen Resonator-Gehäuseelements 41 sind aneinander angepasst, so dass die Resonator-Gehäuseelemente 11, 31 einen dichten Resonator-Gehäuseabschnitt ausbilden.

Wie aus Figuren 11, 12, 14 weiter ersichtlich ist, weist das filterelementseitige Resonator-Gehäuseelement 11 ein Trennwandelement 15 auf, welches in das bodenelementseitige Resonator-Gehäuseelement 31 ragt. Das bodenelementseitige Resonator-Gehäuseelement 31 weist eine bodenelementseitige Trennwandelementhalterung 36 auf. Dadurch bildet das filterelementseitige Trennwandelement 15 und das deckelelementseitige Trennwandelement 45 die Trennwand 25 aus. Das bodenelementseitige Resonator-Gehäuseelement 31 ragt mit einem Abschnitt in die filterelementseitige Resonator-Gehäuseaufnahme 13.

Wie aus Figur 12 weiter ersichtlich ist, weist das filterelementseitige Resonator-Gehäuseelement 11 Verbindungselemente einer Verbindungsanordnung 29 auf, welche die Trennwandelemente 11, 41 und die Resonator-Gehäuseelemente 11, 31, 41 miteinander verbindet.

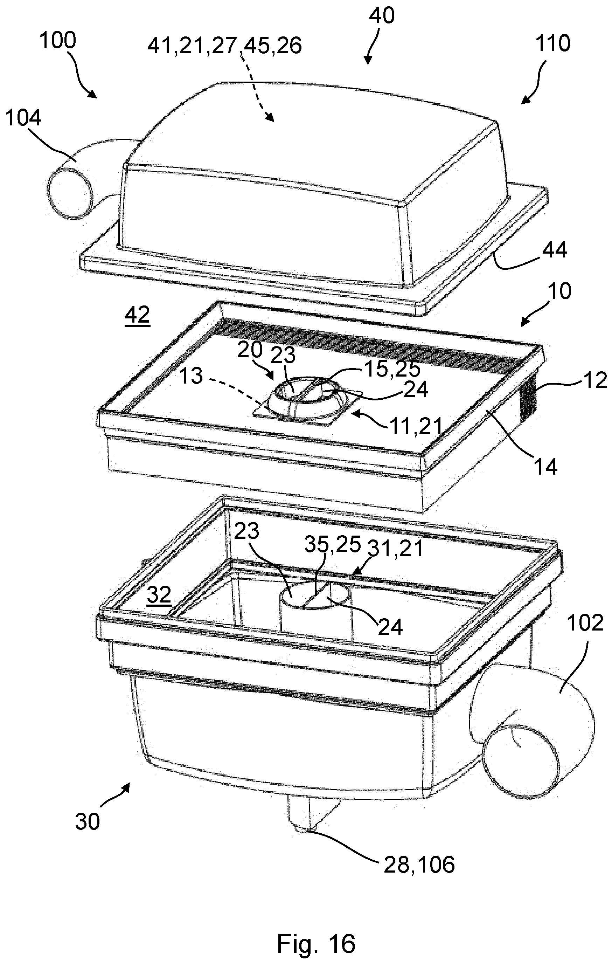

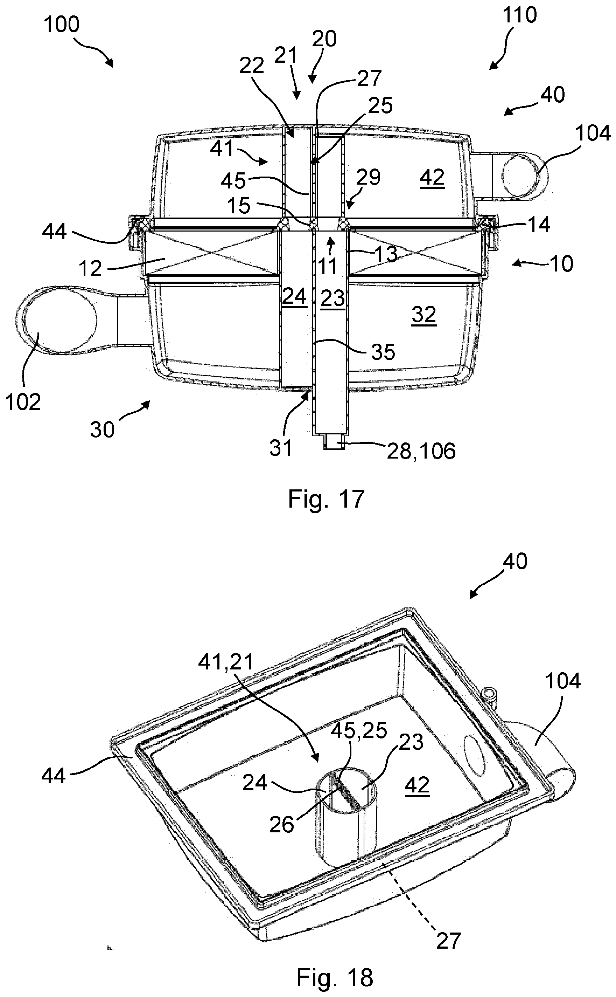

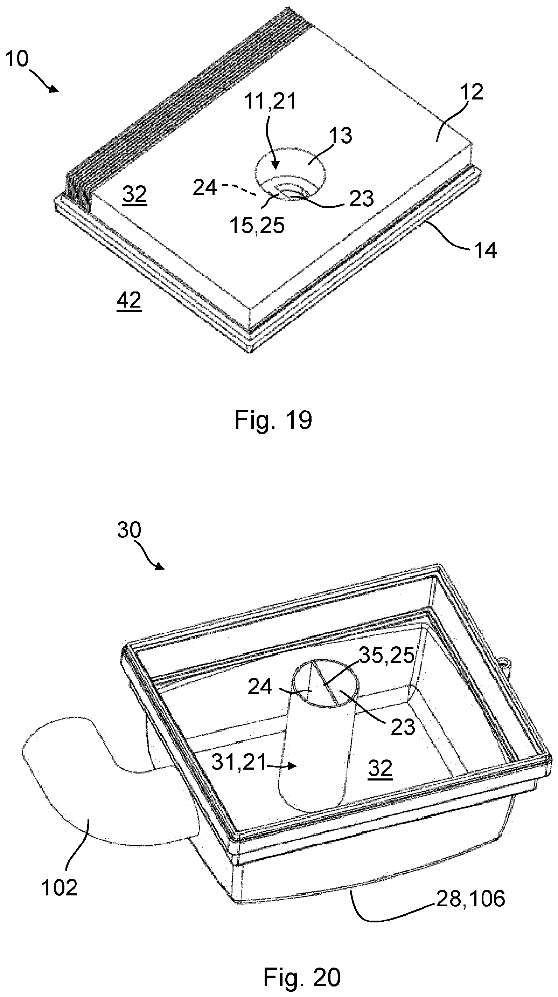

Figuren 16 bis 20 zeigen ein Filtersystem 100 nach einem vierten Ausführungsbeispiel der Erfindung. Hierbei zeigt Figur 16 eine Explosionsansicht des Filtersystems 100 mit einem Filterelement 10 und zwei Gehäuseteilen 30, 40. Figur 17 zeigt eine Schnittdarstellung des Filtersystems 100. Figur. 18 zeigt eine isometrische Ansicht von unten auf ein Deckelelement 40 des Filtersystems 100. Figur 19 zeigt eine isometrische Ansicht von unten auf ein Filterelement 10 des Filtersystems 100. Figur 20 zeigt eine isometrische Draufsicht auf ein Bodenelement 30 des Filtersystems 100.

Wie aus den Figuren 16 bis 18 ersichtlich ist, weist das Deckelelement 40 ein zylinderförmiges nach unten offenes deckelelementseitiges Resonator-Gehäuseelement 41 auf. Das deckelelementseitige Resonator-Gehäuseelement 41 umfasst ein deckelelementseitiges Trennwandelement 45 und den nicht erkennbaren Resonatoreinlass 27. Das deckelelementseitige Resonator-Gehäuseelement 41 ist fest mit dem Deckelelement 40 verbunden. Das deckelelementseitige Trennwandelement 45 ist fest mit dem deckelelementseitigen Resonator-Gehäuseelement 41 verbunden.

Wie aus Figur 18 weiter ersichtlich, weist das deckelelementseitige Trennwandelement 45 an einem dem Filterelement 10 zugewandten Endbereich eine gitterartige Struktur auf, welche die Durchbrüche 26 ausbildet. Die Durchbrüche 26 weisen Abmessungen auf, welche an wenigstens eine vorgegebene Frequenz der Resonatorstruktur 20 angepasst sind. Es sind auch andere Formen und Anzahlen der Durchbrüche 26 möglich.

Wie aus Figuren 16, 17 und 19 ersichtlich ist, weist das Filterelement 10 ein nach oben und unten offenes zylinderförmiges filterelementseitiges Resonator-Gehäuseelement 11 auf. Das filterelementseitige Resonator-Gehäuseelement 11 weist eine geringe Höhe auf und ragt nicht aus der filterelementseitigen Resonator-Gehäuseaufnahme 13 heraus.

Die offenen einander zugewandten Endbereiche des filterelementseitigen Resonator-Gehäuseelements 11 und des deckelelementseitigen Resonator-Gehäuseelements 41 sind aneinander angepasst, so dass die Resonator-Gehäuseelemente 11, 41 einen dichten Resonator-Gehäuseabschnitt ausbilden.

Wie aus Figuren 16, 17 und 20 weiter ersichtlich ist, weist das Bodenelement 30 ein zylinderförmiges bodenelementseitiges Resonator-Gehäuseelement 31 auf. Das bodenelementseitige Resonator-Gehäuseelement 31 weist eine Öffnung auf, welche den Nebenanschlussauslass 106 und den Resonatorauslass 28 ausbilden. Zudem weist das bodenelementseitige Resonator-Gehäuseelement 31 ein bodenelementseitiges Trennwandelement 35 auf. Das bodenelementseitige Trennwandelement 35 ist fest mit dem bodenelementseitigen Resonator-Gehäuseelement 31 verbunden.

Ein dem Filterelement 10 zugewandter offener Endbereich des bodenelementseitigen Resonator-Gehäuseelements 31 ist mit dem filterelementseitigen Resonator-Gehäuseelement 11 verbunden. Der dem Bodenelement 30 zugewandte offene Endbereich des filterelementseitigen Resonator-Gehäuseelements 11 und der offene dem Filterelement 10 zugewandte Endbereich des bodenelementseitigen Resonator-Gehäuseelements 41 sind aneinander angepasst, so dass die Resonator-Gehäuseelemente 11, 31 einen dichten Resonator-Gehäuseabschnitt ausbilden.

Wie aus Figuren 16, 17, 19 weiter ersichtlich ist, ragt bodenelementseitige Resonator-Gehäuseelement 31 mit einem Abschnitt in die filterelementseitige Resonator-Gehäuseaufnahme 13.

Wie aus Figur 17 weiter ersichtlich ist, weist das filterelementseitige Resonator-Gehäuseelement 11 Verbindungselemente einer Verbindungsanordnung 29 auf, welche die Trennwandelemente 11, 31, 41 und die Resonator-Gehäuseelemente 11, 31, 41 miteinander verbindet. Die Trennwand 25 wird durch das filterelementseitige Trennwandelement 15, das deckelelementseitige Trennwandelement 45 und das bodenelementseitige Trennwandelement 35 ausgebildet.

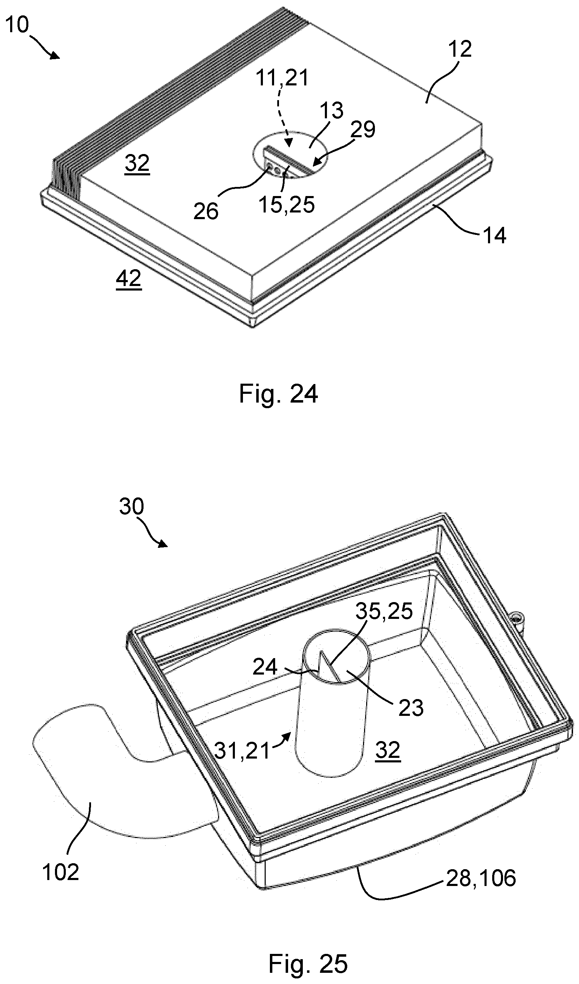

Figuren 21 bis 25 zeigen ein Filtersystem 100 nach einem fünften Ausführungsbeispiel der Erfindung. Hierbei zeigt Figur 21 eine Explosionsansicht des Filtersystems 100 mit einem Filterelement 10 und zwei Gehäuseteilen 30, 40. Figur 22 zeigt eine Schnittdarstellung des Filtersystems 100. Figur. 23 zeigt eine isometrische Ansicht von unten auf ein Deckelelement 40 des Filtersystems 100. Figur 24 zeigt eine isometrische Ansicht von unten auf ein Filterelement 10 des Filtersystems 100. Figur 25 zeigt eine isometrische Draufsicht auf ein Bodenelement 30 des Filtersystems 100.

Wie aus Figuren 21 bis 23 ersichtlich ist, weist das Deckelelement 40 ein zylinderförmiges nach unten offenes deckelelementseitiges Resonator-Gehäuseelement 41 auf. Das deckelelementseitige Resonator-Gehäuseelement 41 umfasst ein deckelelementseitiges Trennwandelement 45 und den nicht erkennbaren Resonatoreinlass 27. Das deckelelementseitige Resonator-Gehäuseelement 41 ist fest mit dem Deckelelement 40 verbunden. Das deckelelementseitige Trennwandelement 45 ist fest mit dem deckelelementseitigen Resonator-Gehäuseelement 41 verbunden.

Wie aus Figur 23 weiter ersichtlich, weist das deckelelementseitige Trennwandelement 45 keine Durchbrüche 26 auf.

Wie aus Figuren 21, 22 und 24 ersichtlich ist, weist das Filterelement 10 ein nach oben und unten offenes zylinderförmiges filterelementseitiges Resonator-Gehäuseelement 11 auf. Das filterelementseitige Resonator-Gehäuseelement 11 weist eine geringe Höhe auf und ragt nicht aus der filterelementseitigen Resonator-Gehäuseaufnahme 13 heraus. Das filterelementseitige Resonator-Gehäuseelement 11 weist ein filterelementseitiges Trennwandelement 15 auf, welches an einem dem Bodenelement zugewandten Endbereich eine Gitterstruktur aufweist, welche die Durchbrüche 26 ausbildet. Die Durchbrüche 26 weisen Abmessungen auf, welche an wenigstens eine vorgegebene Frequenz der Resonatorstruktur 20 angepasst sind. Es sind auch andere Formen und Anzahlen der Durchbrüche 26 möglich.

Die offenen einander zugewandten Endbereiche des filterelementseitigen Resonator-Gehäuseelements 11 und des deckelelementseitigen Resonator-Gehäuseelements 41 sind aneinander angepasst, so dass die Resonator-Gehäuseelemente 11, 41 einen dichten Resonator-Gehäuseabschnitt ausbilden. Zudem sind die einander zugewandten Endbereiche der Trennwandelemente 15, 45 aneinander angepasst.

Wie aus Figuren 21, 22 und 25 weiter ersichtlich ist, weist das Bodenelement 30 ein zylinderförmiges bodenelementseitiges Resonator-Gehäuseelement 31 auf. Das bodenelementseitige Resonator-Gehäuseelement 31 weist eine Öffnung auf, welche den Nebenanschlussauslass 106 und den Resonatorauslass 28 ausbilden. Zudem weist das bodenelementseitige Resonator-Gehäuseelement 31 ein bodenelementseitiges Trennwandelement 35 auf. Das bodenelementseitige Resonator-Gehäuseelement 31 weist einen Abschnitt auf, in welchen ein Abschnitt des filterelementseitigen Trennwandelements 15 hineinragt. Hierbei sind im bodenelementseitige Resonator-Gehäuseelement 31 zwei miteinander verbundene Trennwandelemente 15, 35 angeordnet. Das bodenelementseitige Trennwandelement 35 ist fest mit dem bodenelementseitigen Resonator-Gehäuseelement 31 verbunden.

Ein dem Filterelement 10 zugewandter offener Endbereich des bodenelementseitigen Resonator-Gehäuseelements 31 ist mit dem filterelementseitigen Resonator-Gehäuseelement 11 verbunden. Der dem Bodenelement 30 zugewandte offene Endbereich des filterelementseitigen Resonator-Gehäuseelements 11 und der offene dem Filterelement 10 zugewandte Endbereich des bodenelementseitigen Resonator-Gehäuseelements 41 sind aneinander angepasst, so dass die Resonator-Gehäuseelemente 11, 31 einen dichten Resonator-Gehäuseabschnitt ausbilden.

Wie aus Figuren 21, 22, 25 weiter ersichtlich ist, ragt das bodenelementseitige Resonator-Gehäuseelement 31 mit einem Abschnitt in die filterelementseitige Resonator-Gehäuseaufnahme 13.

Wie aus Figur 22 weiter ersichtlich ist, weist das filterelementseitige Resonator-Gehäuseelement 11 und die Endbereiche des filterelementseitigen Trennwandelementes 15 und des bodenelementseitigen Trennwandelements 35 Verbindungselemente einer Verbindungsanordnung 29 auf, welche die Trennwandelemente 11, 31, 41 und die Resonator-Gehäuseelemente 11, 31, 41 miteinander verbindet. Die Trennwand 21 wird durch das filterelementseitige Trennwandelement 15, das deckelelementseitige Trennwandelement 45 und das bodenelementseitige Trennwandelement 35 ausgebildet.

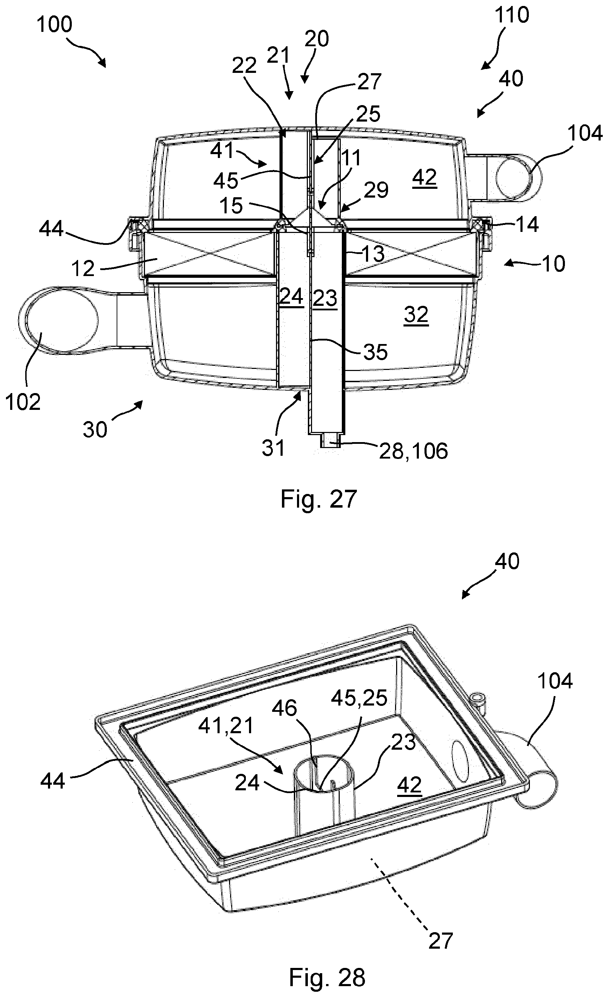

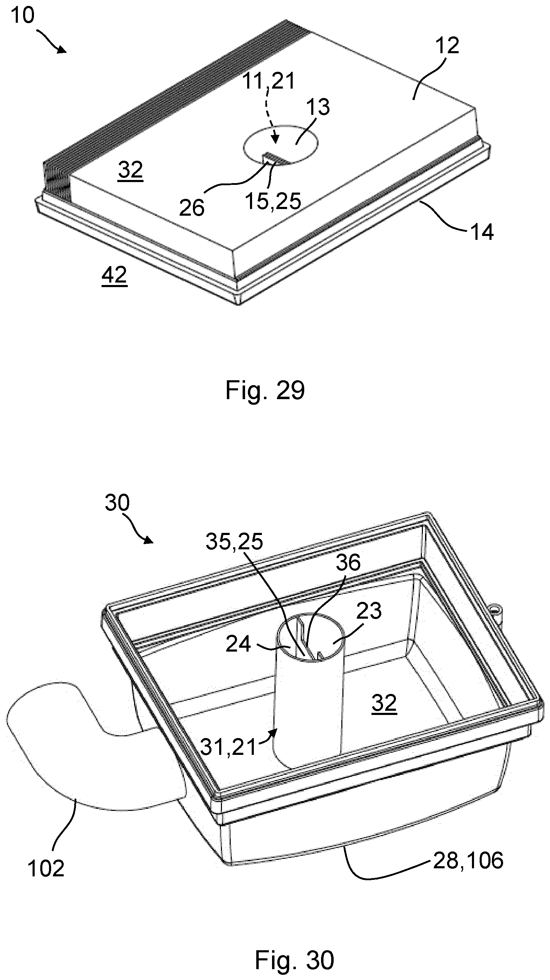

Figuren 26 bis 30 zeigen ein Filtersystem 100 nach einem sechsten Ausführungsbeispiel der Erfindung. Hierbei zeigt Figur 26 eine Explosionsansicht des Filtersystems 100 mit einem Filterelement 10 und zwei Gehäuseteilen 30, 40. Figur 27 zeigt eine Schnittdarstellung des Filtersystems 100. Figur. 28 zeigt eine isometrische Ansicht von unten auf ein Deckelelement 40 des Filtersystems 100. Figur 29 zeigt eine isometrische Ansicht von unten auf ein Filterelement 10 des Filtersystems 100. Figur 30 zeigt eine isometrische Draufsicht auf ein Bodenelement 30 des Filtersystems 100.

Wie aus Figuren 26 bis 28 ersichtlich ist, weist das Deckelelement 40 ein zylinderförmiges nach unten offenes deckelelementseitiges Resonator-Gehäuseelement 41 auf. Das deckelelementseitige Resonator-Gehäuseelement 41 umfasst ein deckelelementseitiges Trennwandelement 45 und den nicht erkennbaren Resonatoreinlass 27. Das deckelelementseitige Resonator-Gehäuseelement 41 ist fest mit dem Deckelelement 40 verbunden. Das deckelelementseitige Trennwandelement 45 ist fest mit dem deckelelementseitigen Resonator-Gehäuseelement 41 verbunden. Das deckelelementseitige Trennwandelement 45 ist kürzer als das mit deckelelementseitige Resonator-Gehäuseelement 41 ausgebildet, so dass im deckelelementseitigen Resonator-Gehäuseelement 41 ein weiteres Trennwandelement angeordnet werden kann.

Wie aus Figur 28 weiter ersichtlich, weist das deckelelementseitige Trennwandelement 45 keine Durchbrüche 26 auf. Das deckelelementseitige Trennwandelement 45 weist eine deckelelementseitige Trennwandelementhalterung 46 auf.

Wie aus Figuren 26, 27 und 29 ersichtlich ist, weist das Filterelement 10 ein nach oben und unten offenes zylinderförmiges filterelementseitiges Resonator-Gehäuseelement 11 auf. Das filterelementseitige Resonator-Gehäuseelement 11 weist eine geringe Höhe auf und ragt nicht aus der filterelementseitigen Resonator-Gehäuseaufnahme 13 heraus. Das filterelementseitige Resonator-Gehäuseelement 11 weist ein filterelementseitiges Trennwandelement 15 auf, welches zu beiden Seiten aus dem filterelementseitigen Resonator-Gehäuseelement 11 ragt. Hierbei weisen ein dem Deckelelement 40 zugewandert Abschnitt und ein dem Bodenelement 30 zugewandter Abschnitt eine gitterartige Struktur auf, welche die Durchbrüche 26 ausbildet. Die Durchbrüche 26 weisen Abmessungen auf, welche an wenigstens eine vorgegebene Frequenz der Resonatorstruktur 20 angepasst sind. Es sind auch andere Formen und Anzahlen der Durchbrüche 26 möglich.

Die offenen einander zugewandten Endbereiche des filterelementseitigen Resonator-Gehäuseelements 11 und des deckelelementseitigen Resonator-Gehäuseelements 41 sind aneinander angepasst, so dass die Resonator-Gehäuseelemente 11, 41 einen dichten Resonator-Gehäuseabschnitt ausbilden. Des Weiteren ist die deckelelementseitige Trennwandelementhalterung 46 und der dem Deckelement 40 zugewandte Abschnitt des filterelementseitigen Trennwandelements 15 so aneinander angepasst, dass die Trennwandelemente 15, 45 einen Trennwandabschnitt ausbilden.

Wie aus Figuren 26, 27 und 30 weiter ersichtlich ist, weist das Bodenelement 30 ein zylinderförmiges bodenelementseitiges Resonator-Gehäuseelement 31 auf. Das bodenelementseitige Resonator-Gehäuseelement 31 weist eine Öffnung auf, welche den Nebenanschlussauslass 106 und den Resonatorauslass 28 ausbilden. Zudem weist das bodenelementseitige Resonator-Gehäuseelement 31 ein bodenelementseitiges Trennwandelement 35 auf. Das bodenelementseitige Trennwandelement 35 weist eine bodenelementseitige Trennwandelementhalterung 36 auf.

Das bodenelementseitige Trennwandelement 35 ist fest mit dem bodenelementseitigen Resonator-Gehäuseelement 31 verbunden.

Ein dem Filterelement 10 zugewandter offener Endbereich des bodenelementseitigen Resonator-Gehäuseelements 31 ist mit dem filterelementseitigen Resonator-Gehäuse-element 11 verbunden. Der dem Bodenelement 30 zugewandte offene Endbereich des filterelementseitigen Resonator-Gehäuseelements 11 und der offene dem Filterelement 10 zugewandte Endbereich des bodenelementseitigen Resonator-Gehäuseelements 41 sind aneinander angepasst, so dass die Resonator-Gehäuseelemente 11, 31 einen dichten Resonator-Gehäuseabschnitt ausbilden. Des Weiteren ist die bodenelementseitige Trennwandelementhalterung 36 und der dem Bodenelement 30 zugewandte Abschnitt des filterelementseitigen Trennwandelements 15 so aneinander angepasst, dass die Trennwandelemente 15, 35 einen Trennwandabschnitt ausbilden.

Wie aus Figuren 26, 27, 29 weiter ersichtlich ist, ragt bodenelementseitige Resonator-Gehäuseelement 31 mit einem Abschnitt in die filterelementseitige Resonator-Gehäuseaufnahme 13.

Wie aus Figur 27 weiter ersichtlich ist, weist das filterelementseitige Resonator-Gehäuseelement 11 Verbindungselemente einer Verbindungsanordnung 29 auf, welche die Resonator-Gehäuseelemente 11, 31, 41 miteinander verbindet. Die Trennwand 25 wird durch das filterelementseitige Trennwandelement 15, das deckelelementseitige Trennwandelement 45 und das bodenelementseitige Trennwandelement 35 ausgebildet.

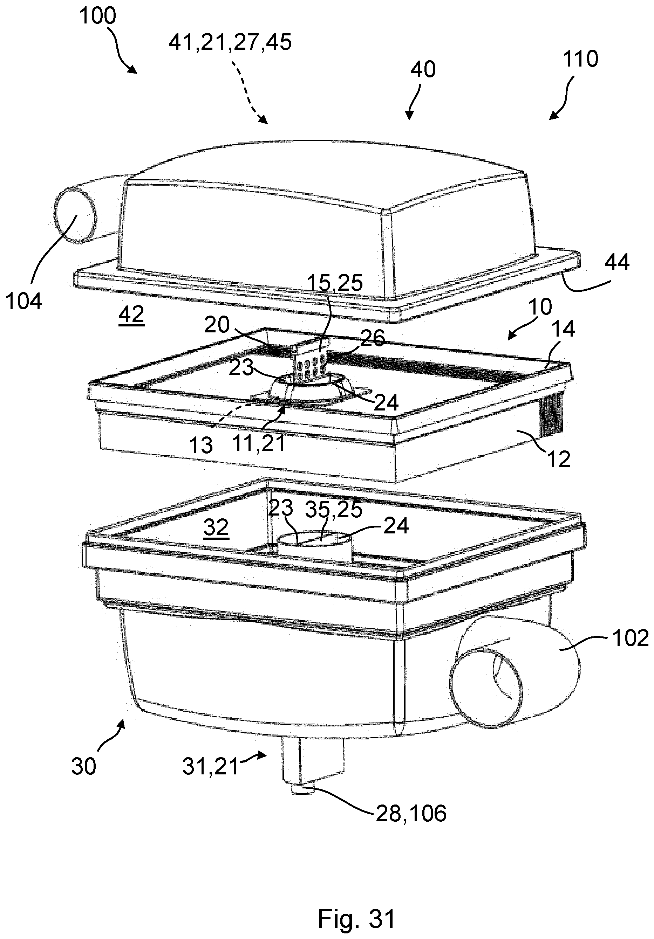

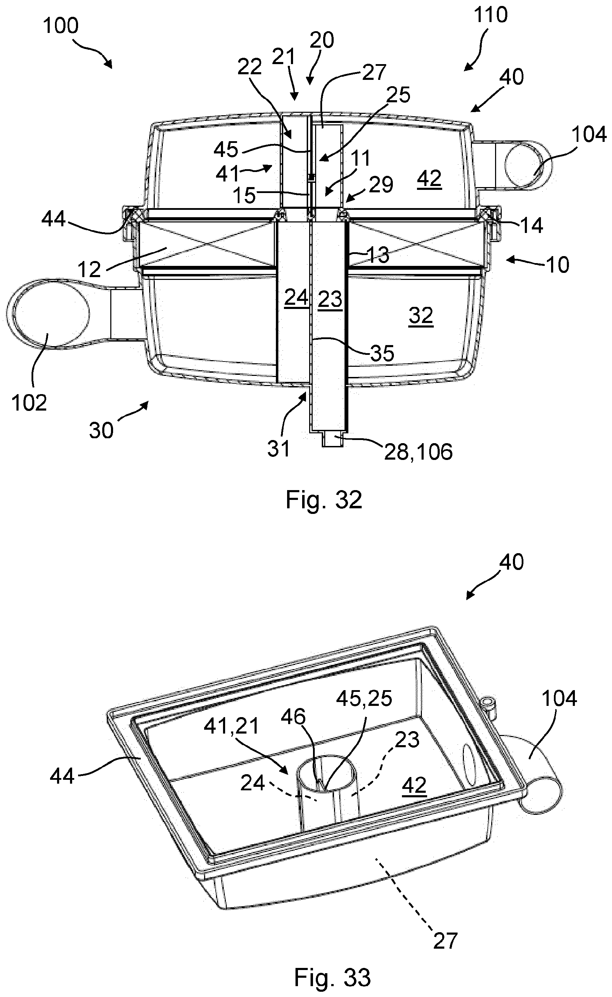

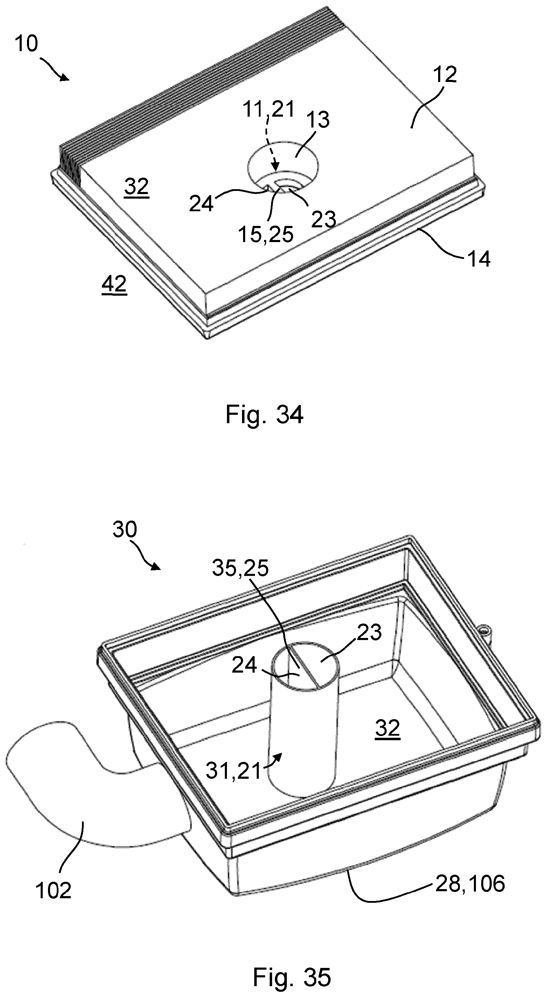

Figuren 31 bis 35 zeigen ein Filtersystem 100 nach einem siebten Ausführungsbeispiel der Erfindung. Hierbei zeigt Figur 31 eine Explosionsansicht des Filtersystems 100 mit einem Filterelement 10 und zwei Gehäuseteilen 30, 40. Figur 32 zeigt eine Schnittdarstellung des Filtersystems 100. Figur. 33 zeigt eine isometrische Ansicht von unten auf ein Deckelelement 40 des Filtersystems 100. Figur 34 zeigt eine isometrische Ansicht von unten auf ein Filterelement 10 des Filtersystems 100. Figur 35 zeigt eine isometrische Draufsicht auf ein Bodenelement 30 des Filtersystems 100.

Wie aus Figuren 31 bis 33 ersichtlich ist, weist das Deckelelement 40 ein zylinderförmiges nach unten offenes deckelelementseitiges Resonator-Gehäuseelement 41 auf. Das deckelelementseitige Resonator-Gehäuseelement 41 umfasst ein deckelelementseitiges Trennwandelement 45 und den nicht erkennbaren Resonatoreinlass 27. Das deckelelementseitige Resonator-Gehäuseelement 41 ist fest mit dem Deckelelement 40 verbunden. Das deckelelementseitige Trennwandelement 45 ist fest mit dem deckelelementseitigen Resonator-Gehäuseelement 41 verbunden.

Wie aus Figur 33 weiter ersichtlich, weist das deckelelementseitige Trennwandelement 45 keine Durchbrüche 26 auf. Das deckelelementseitige Trennwandelement 45 weist eine deckelelementseitige Trennwandelementhalterung 46 auf. Hierbei ist im deckelelementseitigen Resonator-Gehäuseelement 41 Raum für einen Abschnitt des filterelementseitigen Trennwandelements 15. Dadurch sind im deckelelementseitigen Resonator-Gehäuseelement 41 zwei miteinander verbundene Trennwandelemente 15, 45 angeordnet.

Wie aus Figuren 31, 32 und 34 ersichtlich ist, weist das Filterelement 10 ein nach oben und unten offenes zylinderförmiges filterelementseitiges Resonator-Gehäuseelement 11 auf. Das filterelementseitige Resonator-Gehäuseelement 11 weist eine geringe Höhe auf und ragt nicht aus der filterelementseitigen Resonator-Gehäuseaufnahme 13 heraus. Das filterelementseitige Resonator-Gehäuseelement 11 weist ein filterelementseitiges Trennwandelement 15 auf, welches an einem dem Deckelelement 40 zugewandten Endbereich eine Gitterstruktur aufweist, welche die Durchbrüche 26 ausbildet. Die Durchbrüche 26 weisen Abmessungen auf, welche an wenigstens eine vorgegebene Frequenz der Resonatorstruktur 20 angepasst sind. Es sind auch andere Formen und Anzahlen der Durchbrüche 26 möglich.

Die offenen einander zugewandten Endbereiche des filterelementseitigen Resonator-Gehäuseelements 11 und des deckelelementseitigen Resonator-Gehäuseelements 41 sind aneinander angepasst, so dass die Resonator-Gehäuseelemente 11, 41 einen dichten Resonator-Gehäuseabschnitt ausbilden. Zudem sind die einander zugewandten Endbereiche der Trennwandelemente 15, 45 aneinander angepasst.

Wie aus Figuren 31, 32 und 35 weiter ersichtlich ist, weist das Bodenelement 30 ein zylinderförmiges bodenelementseitiges Resonator-Gehäuseelement 31 auf. Das bodenelementseitige Resonator-Gehäuseelement 31 weist eine Öffnung auf, welche den Nebenanschlussauslass 106 und den Resonatorauslass 28 ausbilden. Zudem weist das bodenelementseitige Resonator-Gehäuseelement 31 ein bodenelementseitiges Trennwandelement 35 auf.

Ein dem Filterelement 10 zugewandter offener Endbereich des bodenelementseitigen Resonator-Gehäuseelements 31 ist mit dem filterelementseitigen Resonator-Gehäuse-element 11 verbunden. Der dem Bodenelement 30 zugewandte offene Endbereich des filterelementseitigen Resonator-Gehäuseelements 11 und der offene Endbereich dem Filterelement 10 zugewandte Endbereich des bodenelementseitigen Resonator-Gehäuseelements 41 sind aneinander angepasst, so dass die Resonator-Gehäuseelemente 11, 31 einen dichten Resonator-Gehäuseabschnitt ausbilden.

Wie aus Figuren 31, 32, 55 weiter ersichtlich ist, ragt das bodenelementseitige Resonator-Gehäuseelement 31 mit einem Abschnitt in die filterelementseitige Resonator-Gehäuseaufnahme 13.

Wie aus Figur 32 weiter ersichtlich ist, weist das filterelementseitige Resonator-Gehäuseelement 11 und die Endbereiche des filterelementseitigen Trennwandelementes 15 und des deckelelementseitigen Trennwandelements 45 Verbindungselemente einer Verbindungsanordnung 29 auf, welche die Trennwandelemente 11, 31, 41 und die Resonator-Gehäuseelemente 11, 31, 41 miteinander verbindet. Die Trennwand 21 wird durch das filterelementseitige Trennwandelement 15, das deckelelementseitige Trennwandelement 45 und das bodenelementseitige Trennwandelement 35 ausgebildet.

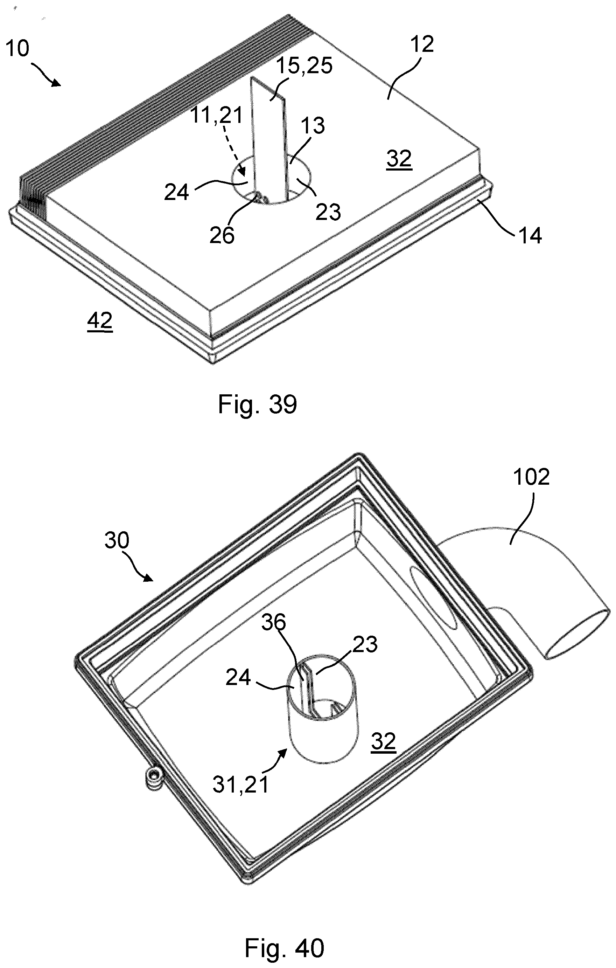

Figuren 36 bis 40 zeigen ein Filtersystem 100 nach einem achten Ausführungsbeispiel der Erfindung. Hierbei zeigt Figur 36 eine Explosionsansicht des Filtersystems 100 mit einem Filterelement 10 und zwei Gehäuseteilen 30, 40. Figur 37 zeigt eine Schnittdarstellung des Filtersystems 100. Figur. 38 zeigt eine isometrische Ansicht von unten auf ein Deckelelement 40 des Filtersystems 100. Figur 39 zeigt eine isometrische Ansicht von unten auf ein Filterelement 10 des Filtersystems 100. Figur 40 zeigt eine isometrische Draufsicht auf ein Bodenelement 30 des Filtersystems 100.

Wie aus Figuren 36 bis 40 ersichtlich ist, weist das Deckelelement 40 ein zylinderförmiges nach unten offenes deckelelementseitiges Resonator-Gehäuseelement 41 auf. Das deckelelementseitige Resonator-Gehäuseelement 41 umfasst den Resonatoreinlass 27 und eine deckelelementseitige Trennwandelementhalterung 46. Das deckelelementseitige Resonator-Gehäuseelement 41 umfasst kein deckelelementseitiges Trennwandelement. Hierbei ist im deckelelementseitigen Resonator-Gehäuseelement 41 Raum für einen Abschnitt des filterelementseitigen Trennwandelements 15. Dadurch ist im deckelelementseitigen Resonator-Gehäuseelement 41 im bestimmungsgemäßen Zustand lediglich das filterelementseitige Trennwandelement 15 angeordnet.

Wie aus Figuren 36, 37 und 39 ersichtlich ist, weist das Filterelement 10 ein nach oben und unten offenes zylinderförmiges filterelementseitiges Resonator-Gehäuseelement 11 auf. Das filterelementseitige Resonator-Gehäuseelement 11 weist eine geringe Höhe auf und ragt nicht aus der filterelementseitigen Resonator-Gehäuseaufnahme 13 heraus. Das filterelementseitige Resonator-Gehäuseelement 11 weist das filterelementseitige Trennwandelement 15 auf, welches eine Gitterstruktur aufweist, welche die Durchbrüche 26 ausbildet. Die Durchbrüche 26 weisen Abmessungen auf, welche an wenigstens eine vorgegebene Frequenz der Resonatorstruktur 20 angepasst sind. Es sind auch andere Formen und Anzahlen der Durchbrüche 26 möglich.

Die offenen einander zugewandten Endbereiche des filterelementseitigen Resonator-Gehäuseelements 11 und des deckelelementseitigen Resonator-Gehäuseelements 41 sind aneinander angepasst, so dass die Resonator-Gehäuseelemente 11, 41 einen dichten Resonator-Gehäuseabschnitt ausbilden. Zudem wird das filterelementseitige Trennwandelement 15 im bestimmungsgemäßen Zustand von der deckelelementseitigen Trennwandelementhalterung 46 gehalten.

Wie aus Figuren 36, 37 und 40 weiter ersichtlich ist, weist das Bodenelement 30 ein zylinderförmiges bodenelementseitiges Resonator-Gehäuseelement 31 auf. Das bodenelementseitige Resonator-Gehäuseelement 31 weist eine Öffnung auf, welche den Nebenanschlussauslass 106 und den Resonatorauslass 28 ausbilden. Zudem weist das bodenelementseitige Resonator-Gehäuseelement 31 eine bodenelementseitige Trennwandelementhalterung 36 auf. Das deckelelementseitige Resonator-Gehäuseelement 31 umfasst kein bodenelementseitiges Trennwandelement. Hierbei ist im bodenelementseitigen Resonator-Gehäuseelement 31 Raum für einen Abschnitt des filterelementseitigen Trennwandelements 15. Dadurch ist im bodenelementseitigen Resonator-Gehäuseelement 31 im bestimmungsgemäßen Zustand lediglich das filterelementseitige Trennwandelement 15 angeordnet.

Ein dem Filterelement 10 zugewandter offener Endbereich des bodenelementseitigen Resonator-Gehäuseelements 31 ist mit dem filterelementseitigen Resonator-Gehäuse-element 11 verbunden. Der dem Bodenelement 30 zugewandte offene Endbereich des filterelementseitigen Resonator-Gehäuseelements 11 und der offene dem Filterelement 10 zugewandte Endbereich des bodenelementseitigen Resonator-Gehäuseelements 41 sind aneinander angepasst, so dass die Resonator-Gehäuseelemente 11, 31 einen dichten Resonator-Gehäuseabschnitt ausbilden.

Wie aus Figuren 36, 37, 40 weiter ersichtlich ist, ragt das bodenelementseitige Resonator-Gehäuseelement 31 mit einem Abschnitt in die filterelementseitige Resonator-Gehäuseaufnahme 13.

Wie aus Figur 37 weiter ersichtlich ist, weist das filterelementseitige Resonator-Gehäuseelement 11 Verbindungselemente einer Verbindungsanordnung 29 auf, welche die Resonator-Gehäuseelemente 11, 31, 41 miteinander verbindet. Die Trennwand 21 wird durch das filterelementseitige Trennwandelement 15 ausgebildet.

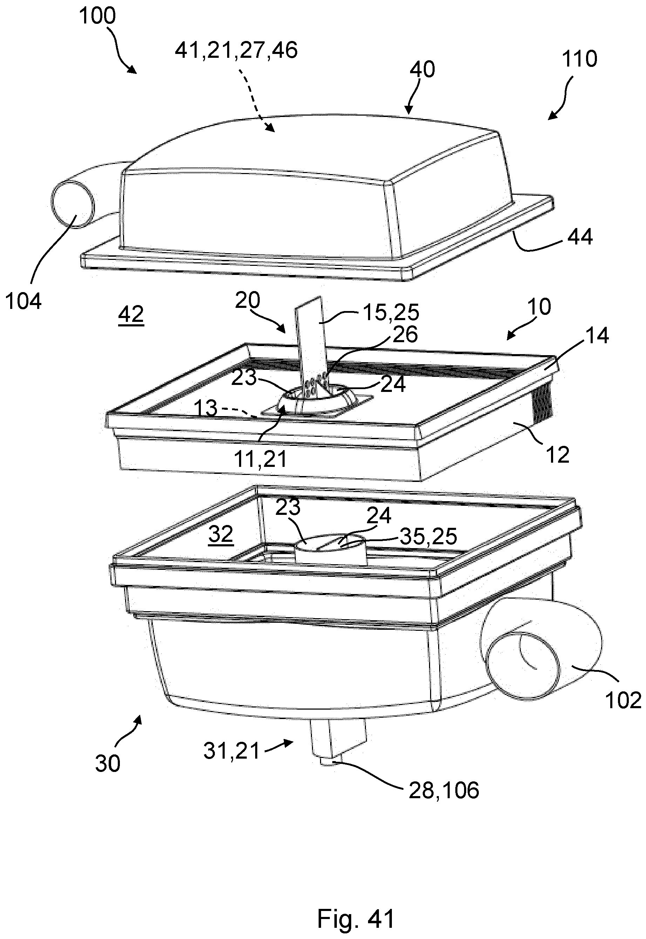

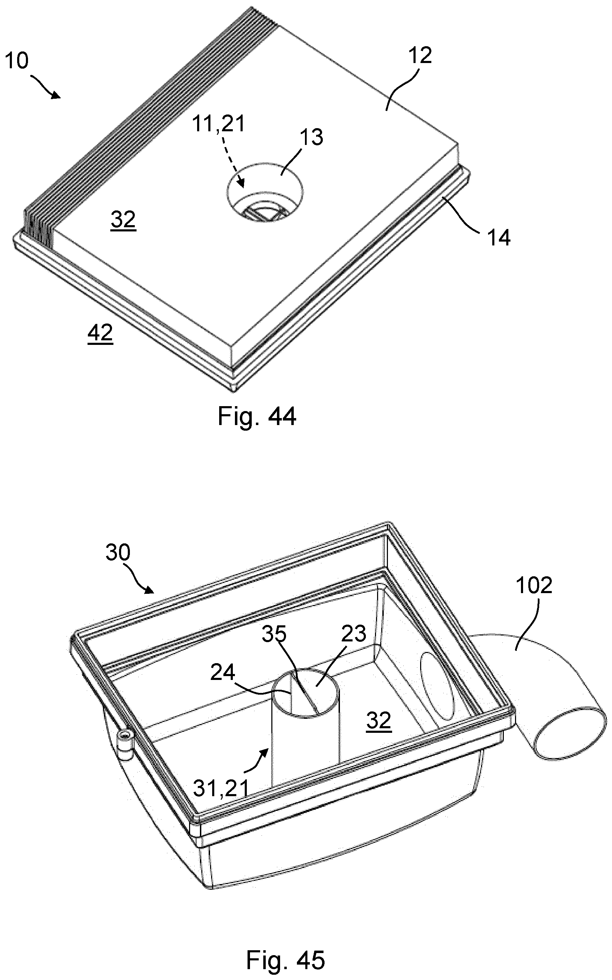

Figuren 41 bis 45 zeigen ein Filtersystem 100 nach einem neunten Ausführungsbeispiel der Erfindung. Hierbei zeigt Figur 41 eine Explosionsansicht des Filtersystems 100 mit einem Filterelement 10 und zwei Gehäuseteilen 30, 40. Figur 42 zeigt eine Schnittdarstellung des Filtersystems 100. Figur. 43 zeigt eine isometrische Ansicht von unten auf ein Deckelelement 40 des Filtersystems 100. Figur 44 zeigt eine isometrische Ansicht von unten auf ein Filterelement 10 des Filtersystems 100. Figur 45 zeigt eine isometrische Draufsicht auf ein Bodenelement 30 des Filtersystems 100.

Wie aus Figuren 41 bis 43 ersichtlich ist, weist das Deckelelement 40 ein zylinderförmiges nach unten offenes deckelelementseitiges Resonator-Gehäuseelement 41 auf. Das deckelelementseitige Resonator-Gehäuseelement 41 umfasst den Resonatoreinlass 27 und eine deckelelementseitige Trennwandelementhalterung 46. Das deckelelementseitige Resonator-Gehäuseelement 41 umfasst kein deckelelementseitiges Trennwandelement. Hierbei ist im deckelelementseitigen Resonator-Gehäuseelement 41 Raum für einen Abschnitt des filterelementseitigen Trennwandelements 15. Dadurch ist im deckelelementseitigen Resonator-Gehäuseelement 41 im bestimmungsgemäßen Zustand lediglich das filterelementseitige Trennwandelement 15 angeordnet.

Wie aus Figuren 41, 42 und 44 ersichtlich ist, weist das Filterelement 10 ein nach oben und unten offenes zylinderförmiges filterelementseitiges Resonator-Gehäuseelement 11 auf. Das filterelementseitige Resonator-Gehäuseelement 11 weist eine geringe Höhe auf und ragt nicht aus der filterelementseitigen Resonator-Gehäuseaufnahme 13 heraus. Das filterelementseitige Resonator-Gehäuseelement 11 weist das filterelementseitige Trennwandelement 15 auf, welches an einem dem Filterelement 10 zugewandten Endbereich eine Gitterstruktur auf, welche die Durchbrüche 26 ausbildet. Die Durchbrüche 26 weisen Abmessungen auf, welche an wenigstens eine vorgegebene Frequenz der Resonatorstruktur 20 angepasst sind. Es sind auch andere Formen und Anzahlen der Durchbrüche 26 möglich.

Die offenen einander zugewandten Endbereiche des filterelementseitigen Resonator-Gehäuseelements 11 und des deckelelementseitigen Resonator-Gehäuseelement 41 sind aneinander angepasst, so dass die Resonator-Gehäuseelemente 11, 41 einen dichten Resonator-Gehäuseabschnitt ausbilden. Zudem wird das filterelementseitige Trennwandelement 15 im bestimmungsgemäßen Zustand von der deckelelementseitigen Trennwandelementhalterung 46 gehalten.

Wie aus Figuren 41, 42 und 45 weiter ersichtlich ist, weist das Bodenelement 30 ein zylinderförmiges bodenelementseitiges Resonator-Gehäuseelement 31 auf. Das bodenelementseitige Resonator-Gehäuseelement 31 weist eine Öffnung auf, welche den Nebenanschlussauslass 106 und den Resonatorauslass 28 ausbilden. Zudem weist das bodenelementseitige Resonator-Gehäuseelement 31 ein bodenelementseitiges Trennwandelement 35 auf.

Ein dem Filterelement 10 zugewandter offener Endbereich des bodenelementseitigen Resonator-Gehäuseelements 31 ist mit dem filterelementseitigen Resonator-Gehäuse-element 11 verbunden. Der dem Bodenelement 30 zugewandte offene Endbereich des filterelementseitigen Resonator-Gehäuseelements 11 und der offene Endbereich dem Filterelement 10 zugewandte Endbereich des bodenelementseitigen Resonator-Gehäuseelements 41 sind aneinander angepasst, so dass die Resonator-Gehäuseelemente 11, 31 einen dichten Resonator-Gehäuseabschnitt ausbilden.

Wie aus Figuren 41, 42, 45 weiter ersichtlich ist, ragt das bodenelementseitige Resonator-Gehäuseelement 31 mit einem Abschnitt in die filterelementseitige Resonator-Gehäuseaufnahme 13.

Wie aus Figur 42 weiter ersichtlich ist, weist das filterelementseitige Resonator-Gehäuseelement 11 und die Endbereiche des filterelementseitigen Trennwandelementes 15 und des bodenelementseitigen Trennwandelements 45 Verbindungselemente einer Verbindungsanordnung 29 auf, welche die Trennwandelemente 11, 41 und die Resonator-Gehäuseelemente 11, 31, 41 miteinander verbindet. Die Trennwand 21 wird durch das filterelementseitige Trennwandelement 15 und das bodenelementseitige Trennwandelement 45 ausgebildet.

In einem nicht dargestellten Ausführungsbeispiel sind andere geeignete Formen und Abmessungen des Rahmens 14 und/oder des Faltenbalgs 12 und/oder der Trennwand 25 und/oder der Trennwandelemente 15, 35, 45 und/oder des Filtergehäuses 110 und/oder der Gehäuseteile 30, 40 möglich. Beispielsweise können die Querschnitte andere Formen, als die dargestellten rechteckigen Formen aufweisen.

In einem weiteren nicht dargestellten Ausführungsbeispiel sind zusätzlich oder alternativ andere geeignete Formen und Abmessungen des Resonator-Gehäuses 21 und/oder der Resonator-Gehäuseelemente 11, 31, 41 möglich. Anstelle der zylinderförmigen Ausgestaltung wäre auch eine eckige Ausgestaltung vorstellbar. Das Resonator-Gehäuse 21 kann anstelle des runden Querschnitts auch einen eckigen oder ovalen oder halbrunden Querschnitt aufweisen.

### Bezugszeichen

- 10: Filterelement
- 11: filterelementseitiges Resonator-Gehäuseelement
- 12: Filterbalg
- 13: filterelementseitige Resonator-Gehäuseaufnahme
- 14: Rahmen
- 15: filterelementseitiges Trennwandelement
- 20: Resonatorstruktur
- 21: mehrteiliges Resonator-Gehäuse
- 22: Hohlraum
- 23: erste Kammer
- 24: zweite Kammer
- 25: (mehrteilige) Trennwand (zwischen Kammern)
- 26: Durchbruch
- 27: Resonatoreinlass
- 28: Resonatorauslass
- 29: Verbindungsanordnung zwischen Trennwandelementen
- 30: Bodenelement
- 31: bodenelementseitiges Resonator-Gehäuseelement
- 32: Rohfluidbereich
- 33: bodenelementseitige Resonator-Gehäuseaufnahme (Halterung)
- 35: bodenelementseitiges Trennwandelement
- 36: bodenelementseitige Trennwandelementhalterung
- 40: Deckelelement
- 41: deckelelementseitiges Resonator-Gehäuseelement
- 42: Reinfluidbereich
- 44: Aufnahmebereich
- 45: deckelelementseitiges Trennwandelement
- 46: deckelelementseitige Trennwandelementhalterung
- 100: Filtersystem
- 102: Haupteinlass
- 104: Hauptauslass
- 106: Nebenanschlussauslass fluidisch mit 28 gekoppelt
- 110: Filtergehäuse

## Patentansprüche

1. Filtersystem (100) mit einem Filtergehäuse (110), welches einen Innenraum umschließt, in welchem ein austauschbares Filterelement (10) und eine Resonatorstruktur (20) angeordnet sind, wobei die Resonatorstruktur (20) ein mehrteiliges Resonator-Gehäuse (21) umfasst, welches im bestimmungsgemäßen Zustand einen Hohlraum (22) umschließt, welcher durch eine Trennwand (25) in zwei Kammern (23, 24) aufgeteilt ist, wobei die Trennwand (25), wenigstens einen Durchbruch (26) umfasst, über welchen die beiden Kammern (23, 24) akustisch gekoppelt sind, wobei zumindest ein Gehäuseteil (30, 40) des Filtergehäuses (110) ein Resonator-Gehäuseelement (31, 41) umfasst und wobei das Filterelement (10) ein Resonator-Gehäuseelement (11) umfasst, wobei die Resonator-Gehäuseelemente (41, 31, 11) im bestimmungsgemäßen Zustand ein geschlossenes Resonator-Gehäuse (21) ausbilden, wobei das Filterelement (10) einen Filterbalg (12) aufweist, und wobei das Filterelement (10) eine den Filterbalg (12) durchbrechende Aussparung aufweist, die sich von einer Anströmseite des Filterbalgs (12) bis zu einer Abströmseite des Filterbalgs (12) erstreckt und eine filterelementseitige Resonator-Gehäuseaufnahme (13) ausbildet, wobei in der Aussparung im bestimmungsgemäßen Zustand wenigstens ein Resonator-Gehäuseelement (11, 31, 41) angeordnet ist.

2. Filtersystem nach Anspruch 1, wobei das mehrteilige Resonator-Gehäuse (21) einen Resonatoreinlass (27) und einen Resonatorauslass (28) umfasst, welche mit einer ersten Kammer (23) gekoppelt sind, wobei der Resonatoreinlass (27) in einem Reinfluidbereich (42) des Innenraums angeordnet ist und der Resonatorauslass (28) mit einem Nebenanschlussauslass (106) des Filtergehäuses (110) gekoppelt ist.

3. Filtersystem nach Anspruch 1 oder 2, wobei die Trennwand (25) einteilig oder mehrteilig ausgeführt ist.

4. Filtersystem nach Anspruch 3, wobei wenigstens ein Trennwandelement (15, 35, 45) der Trennwand (25) mit einem der Resonator-Gehäuseelemente (11, 31, 41) verbunden ist und aus dem entsprechenden Resonator-Gehäuseelement (11, 31, 41) herausragt und im bestimmungsgemäßen Zustand in wenigstens ein weiteres Resonator-Gehäuseelement (11, 31, 41) hineinragt.

5. Filtersystem nach Anspruch 3 oder 4, wobei wenigstens zwei Resonator-Gehäuseelemente (11, 31, 41) jeweils mit einem Trennwandelement (15, 35, 45) verbunden sind, welche im bestimmungsgemäßen Zustand die Trennwand (25) ausbilden.

6. Filtersystem nach Anspruch 4 oder 5, wobei Resonator-Gehäuseelemente (11, 31, 41), in welche ein Trennwandelement (15, 35, 45) hineinragt, eine Trennwandelementhaltung (36, 46, 16) aufweisen.

7. Filtersystem (100) nach einem der vorhergehenden Ansprüche, wobei zumindest ein Gehäuseteil (30, 40) des Filtergehäuses (110) eine gehäuseteilseitige Resonator-Gehäuseaufnahme (33) aufweist, in welche ein Resonator-Gehäuseelement (41, 31, 11) zumindest teilweise hineinragt.

8. Filtersystem (100) nach einem der vorhergehenden Ansprüche, wobei wenigstens ein Resonator-Gehäuseelement (41, 31, 11) jeweils einen Hohlraum für beide Kammern (23, 24) umschließt.

9. Filtersystem (100) nach einem der vorhergehenden Ansprüche, wobei wenigstens zwei Resonator-Gehäuseelemente (41, 11) jeweils einen Hohlraum für eine der beiden Kammern (23, 24) umschließt, wobei die Kammern (23, 24) der beiden Resonator-Gehäuseelemente (41, 11) im bestimmungsgemäßen Zustand nebeneinander angeordnet.

10. Filtersystem (100) nach einem der vorhergehenden Ansprüche, wobei der wenigstens eine Durchbruch (26) der Trennwand (25) im Bereich des Resonatoreinlasses (27) angeordnet ist.

11. Filtersystem (100) nach einem der vorhergehenden Ansprüche, wobei das Filterelement (10) einen umlaufenden Rahmen (14) umfasst.

12. Filtersystem (100) nach einem der vorhergehenden Ansprüche, das Filtergehäuse (110) zweiteilig ausgebildet ist, wobei ein Bodenelement (30) den Nebenanschlussauslass (106) aufweist.

13. Filtersystem nach Anspruch 12, wobei das Bodenelement (30) zudem den Haupteinlass (102) aufweist und wobei ein Deckelelement (40) den Hauptauslass (104) aufweist, wobei das Filterelement (10) in Strömungsrichtung zwischen dem Haupteinlass (102) und den beiden Auslässen (104, 106) angeordnet ist.

14. Verwendung eines Filterelements (10) in einem Filtersystem (100) nach einem der vorigen Ansprüche, wobei das Filterelement (10) einen Filterbalg (12) aufweist, und wobei das Filterelement (10) eine den Filterbalg (12) durchbrechende Aussparung aufweist, die sich von einer Anströmseite des Filterbalgs (12) bis zu einer Abströmseite des Filterbalgs (12) erstreckt und eine filterelementseitige Resonator-Gehäuseaufnahme (13) ausbildet, wobei in der Aussparung im bestimmungsgemäßen Zustand wenigstens ein Resonator-Gehäuseelement (11, 31, 41) angeordnet ist.

## Claims

1. A filter system (100) with a filter housing (110) enclosing an interior space in which a replaceable filter element (10) and a resonator structure (20) are disposed, wherein the resonator structure (20) comprises a multi-part resonator housing (21) enclosing, as intended, a cavity (22) divided into two chambers (23, 24) by a partition wall (25), wherein the partition wall (25) comprises at least one breakthrough (26) through which the two chambers (23, 24) are acoustically coupled, wherein at least one housing component (30, 40) of the filter housing (110) comprises a resonator housing component (31, 41) and wherein the filter element (10) comprises a resonator housing component (11), wherein the resonator housing components (41, 31, 11) form, as intended, a closed resonator housing (21), wherein the filter element (10) features a filter bellows (12), and wherein the filter element (10) features a recess penetrating the filter bellows (12) and extending from an upstream side of the filter bellows (12) to a downstream side of the filter bellows (12) and forming a resonator housing receptacle (13) on the filter element side, wherein at least one resonator housing component (11, 31, 41) is arranged in the recess as intended.

2. The filter system according to claim 1, wherein the multi-part resonator housing (21) comprises a resonator inlet (27) and a resonator outlet (28) which are coupled to a first chamber (23), wherein the resonator inlet (27) is disposed in a clean fluid area (42) of the interior space and the resonator outlet (28) is coupled to a secondary connection outlet (106) of the filter housing (110).

3. The filter system according to claim 1 or 2, wherein the partition wall (25) is designed in one piece or in multiple pieces.

4. The filter system according to claim 3, wherein at least one partition wall element (15, 35, 45) of the partition wall (25) is connected to one of the resonator housing components (11, 31, 41) and protrudes from the corresponding resonator housing component (11, 31, 41) and, as intended, protrudes into at least one further resonator housing component (11, 31, 41).

5. The filter system according to claim 3 or 4, wherein at least two resonator housing components (11, 31, 41) are each connected to a partition wall element (15, 35, 45) which form, as intended, the partition wall (25).

6. The filter system according to claim 4 or 5, wherein resonator housing components (11, 31, 41), into which a partition wall element (15, 35, 45) projects, feature a partition wall element holder (36, 46, 16).

7. The filter system (100) according to one of the preceding claims, wherein at least one housing component (30, 40) of the filter housing (110) features a resonator housing receptacle (33) on the housing part side, into which a resonator housing component (41, 31, 45) 11) at least partially protrudes.

8. The filter system (100) according to one of the preceding claims, wherein at least one resonator housing component (41, 31, 11) encloses a cavity for both chambers (23, 24), respectively.

9. The filter system (100) according to one of the preceding claims, wherein at least two resonator housing components (41, 11) each enclose a cavity for one of the two chambers (23, 24), wherein the chambers (23, 24) of the two resonator housing components (41, 11) are disposed next to each other as intended.

10. The filter system (100) according to one of the preceding claims, wherein the at least one breakthrough (26) in the partition wall (25) is arranged in the area of the resonator inlet (27).

11. The filter system (100) according to one of the preceding claims, wherein the filter element (10) comprises a surrounding frame (14).

12. The filter system (100) according to one of the preceding claims, wherein the filter housing (110) is designed in two parts, wherein a bottom element (30) features the secondary connection outlet (106).

13. The filter system according to claim 12, wherein the bottom element (30) also features the main inlet (102) and wherein a cover element (40) features the main outlet (104), wherein the filter element (10) is arranged in the direction of flow between the main inlet (102) and the two outlets (104, 106).

14. A use of a filter element (10) in a filter system (100) according to one of the previous claims, wherein the filter element (10) features a filter bellows (12), and wherein the filter element (10) features a recess penetrating the filter bellows (12) and extending from an upstream side of the filter bellows (12) to a downstream side of the filter bellows (12) and forming a resonator housing receptacle (13) on the filter element side, wherein at least one resonator housing component (11, 31, 41) is disposed in the recess as intended.

## Revendications

1. Système de filtre (100) avec un boîtier de filtre (110) entourant un espace intérieur dans lequel sont disposés un élément filtrant échangeable (10) et une structure de résonateur (20), la structure de résonateur (20) comprenant un boîtier de résonateur en plusieurs parties (21) qui, conformément à l'utilisation prévue, entoure un espace creux (22) divisé en deux chambres (23, 24) par une cloison (25), la cloison (25) comprenant au moins un passage (26) par lequel les deux chambres (23, 24) sont couplées acoustiquement, au moins un composant de boîtier (30, 40) du boîtier de filtre (110) comprenant un élément de boîtier de résonateur (31, 41) et l'élément filtrant (10) comprenant un élément de boîtier de résonateur (11), les éléments de boîtier de résonateur (41, 31, 11) formant, conformément à l'utilisation prévue, un boîtier de résonateur fermé (21), l'élément filtrant (10) présentant un soufflet de filtre (12), et l'élément filtrant (10) présentant un évidement traversant le soufflet de filtre (12), l'évidement s'étendant d'un côté amont du soufflet de filtre (12) jusqu'à un côté aval du soufflet de filtre (12) et forme un logement de boîtier de résonateur (13) côté élément filtrant, au moins un élément de boîtier de résonateur (11, 31, 41) étant disposé, conformément à l'utilisation prévue, dans l'évidement.

2. Système de filtre selon la revendication 1, le boîtier de résonateur en plusieurs parties (21) comprenant une entrée de résonateur (27) et une sortie de résonateur (28) qui sont couplées à une première chambre (23), l'entrée du résonateur (27) étant disposée dans une zone de liquide pur (42) de l'espace intérieur et la sortie du résonateur (28) étant couplée à une sortie de raccordement secondaire (106) du boîtier de filtre (110).

3. Système de filtre selon la revendication 1 ou 2, la cloison (25) étant réalisée d'un seul tenant ou en plusieurs parties.

4. Système de filtre selon la revendication 3, au moins un élément de cloison (15, 35, 45) de la cloison (25) étant relié à l'un des éléments de boîtier de résonateur (11, 31, 41) et dépassant de l'élément de boîtier de résonateur correspondant (11, 31, 41) et, conformément à l'utilisation prévue, pénétrant dans au moins un autre élément de boîtier de résonateur (11, 31, 41).

5. Système de filtre selon la revendication 3 ou 4, au moins deux éléments de boîtier de résonateur (11, 31, 41) étant reliés chacun à un élément de cloison (15, 35, 45) qui, conformément à l'utilisation prévue, forme la cloison (25).

6. Système de filtre selon la revendication 4 ou 5, les éléments de boîtier de résonateur (11, 31, 41), dans lesquels fait saillie un élément de cloison (15, 35, 45), présentant un dispositif de maintien d'élément de cloison (36, 46, 16).

7. Système de filtre (100) selon l'une quelconque des revendications précédentes, au moins un composant de boîtier (30, 40) du boîtier de filtre (110) présentant un logement de boîtier de résonateur (33) côté partie de boîtier, dans lequel un élément de boîtier de résonateur (41, 31, 11) fait saillie au moins partiellement.

8. Système de filtre (100) selon l'une quelconque des revendications précédentes, au moins un élément de boîtier de résonateur (41, 31, 11) entourant respectivement un espace creux pour les deux chambres (23, 24).

9. Système de filtre (100) selon l'une quelconque des revendications précédentes, au moins deux éléments de boîtier de résonateur (41, 11) entourant chacun un espace creux pour l'une des deux chambres (23, 24), les chambres (23, 24) des deux éléments de boîtier de résonateur (41, 11) étant disposées l'une à côté de l'autre conformément à l'utilisation prévue.

10. Système de filtre (100) selon l'une quelconque des revendications précédentes, le passage (26), au moins au nombre d'un, de la cloison (25) étant disposé dans la zone de l'entrée du résonateur (27).

11. Système de filtre (100) selon l'une quelconque des revendications précédentes, l'élément filtrant (10) comprenant un cadre périphérique (14).

12. Système de filtre (100) selon l'une quelconque des revendications précédentes, le boîtier de filtre (110) étant constitué de deux parties, un élément de fond (30) présentant la sortie de raccordement secondaire (106).

13. Système de filtre selon la revendication 12, l'élément de fond (30) présentant en outre l'entrée principale (102) et un élément de couvercle (40) présentant la sortie principale (104), l'élément filtrant (10) étant disposé dans le sens d'écoulement entre l'entrée principale (102) et les deux sorties (104, 106).

14. Utilisation d'un élément filtrant (10) dans un système de filtre (100) selon l'une quelconque des revendications précédentes, l'élément filtrant (10) présentant un soufflet de filtre (12) et l'élément filtrant (10) présentant un évidement traversant le soufflet de filtre (12) et s'étendant depuis un côté amont du soufflet de filtre (12) jusqu'à un côté aval du soufflet de filtre (12) et formant un logement de boîtier de résonateur (13) côté élément filtrant, au moins un élément de boîtier de résonateur (11, 31, 41) étant disposé dans l'évidement conformément à l'utilisation prévue.
